# EUROPEAN PATENT APPLICATION

(11) **EP 4 535 868 A1**
(43) Date of publication of application: **09.04.2025**
(21) Application number: 23842004.6
(22) Date of filing: 21.06.2023
(51) Int. Cl.: H04W 36/00

(54) **COMMUNICATION METHOD AND APPARATUS**

(30) Priority: 20.07.2022 CN 202210852364
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN)
(74) Representative: Goddar, Heinz J.
(86) International application number: PCT/CN2023/101866
(87) International publication number: WO 2024/016938

(57) **Abstract**

This application provides a communication method and apparatus. The method may be applied to a terminal device. The method includes: sending first failure information to a second network device when a radio link between the terminal device and a first network device fails, where the first failure information includes first conditional handover configuration information; and receiving a first response message from the second network device, where the first response message includes first indication information or a cell identifier of a first cell. The first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information. The terminal device may access, based on the first response information, the cell in the candidate cell configured based on the first conditional handover configuration information, so that a radio link between the terminal device and a master cell group can be quickly recovered.

## Description

This application claims priority to Chinese Patent Application No. 202210852364.7, filed with the China National Intellectual Property Administration on July 20, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless network, a manner in which one user equipment (user equipment, UE) communicates with a plurality of base stations is referred to as dual connectivity (dual connectivity, DC) or multi-radio dual connectivity (multi-Radio dual connectivity, MR-DC). In DC, a base station that exchanges control plane signaling with a core network is referred to as a master base station or a master node (master node, MN), and other base stations are referred to as secondary base stations or secondary nodes (secondary nodes, SNs).

The UE may simultaneously receive services of a plurality of cells served by one base station. A cell group in which an MN provides a service for the UE may be referred to as a master cell group (master cell group, MCG), and a cell group in which an SN provides a service for the UE may be referred to as a secondary cell group (secondary cell group, SCG). In this case, the UE may be connected to the MN by using one or more cells in the MCG, or may be connected to the SN by using one or more cells in the SCG.

When the UE detects a radio link failure (radio link failure, RLF) between the UE and a source MN, how to access a target MN as soon as possible and recover a radio link between the UE and an MCG is still an urgent problem to be resolved currently.

### SUMMARY

Embodiments of this application provide a communication method and apparatus, to help quickly recover a radio link between a terminal device and a master cell group.

According to a first aspect, an embodiment of this application provides a communication method. The method may be applied to a terminal device (for example, a device or a chip of the terminal device). In the method, when a radio link between the terminal device and a first network device fails, the terminal device sends first failure information to a second network device, where the first failure information includes first conditional handover configuration information; and the terminal device receives a first response message from the second network device, where the first response message includes first indication information or a cell identifier of a first cell.

The first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information. The first conditional handover configuration information is conditional handover configuration information configured by the first network device for the terminal device. The first network device is a network device to which a master cell group accessed by the terminal device belongs, and the second network device is a network device to which a secondary cell group accessed by the terminal device belongs.

In this embodiment of this application, when the radio link between the terminal device and the first network device fails, the terminal device may receive, when performing radio link recovery with the first network device, the first indication information that indicates to select the cell to access the candidate cell configured based on the first conditional handover configuration information, or receive the cell identifier of the first cell selected from the candidate cell configured based on the first conditional handover configuration information. In this way, the terminal device can access, in a timely manner, the cell in the candidate cell configured based on the first conditional handover configuration information. This helps quickly recover a radio link between the terminal device and the master cell group.

In addition, the first failure information reported when the radio link between the terminal device and the first network device fails and the terminal device performs radio link recovery with the first network device includes the first conditional handover configuration information, to help the first network device subsequently optimize conditional handover configuration information of the terminal device based on the first failure information. This can reduce a quantity of excessively late conditional handovers, thereby reducing a probability of the radio link failure between the terminal device and the first network device.

In an optional implementation, if the terminal device fails to access the first cell or a second cell, or the terminal device successfully accesses the first cell or a second cell and a radio link failure occurs within preset duration, the terminal device performs radio resource control connection reestablishment. The second cell is a cell that the terminal device selects to access based on the first indication information.

If the terminal device fails to access the cell based on the first response information, or the terminal device successfully accesses the cell but the radio link failure occurs within the preset duration, it may be considered that the terminal device unsuccessfully accesses a target cell based on the first response information. Therefore, the terminal device performs radio resource control connection reestablishment to re-access the target cell.

In an optional implementation, if the terminal device fails to access the first cell or the second cell, or the terminal device successfully accesses the first cell or the second cell and the radio link failure occurs within the preset duration, the terminal device may further record second failure information, and send a failure report to a third network device, where the failure report includes the second failure information. The third network device is a network device that the terminal device successfully re-accesses.

The second failure information includes a message indication type of the first response message, and further includes that the terminal device fails to access the first cell or a second cell based on the first response message, or that the terminal device successfully accesses the first cell or a second cell based on the first response message and the radio link failure occurs within the preset duration; and the message indication type of the first response message indicates that the first response message includes the first indication information or the cell identifier of the first cell.

The terminal device may further send, to the third network device in a form of a failure report, the second failure information recorded when the terminal device unsuccessfully accesses the cell based on the first response information, so that the third network device forwards the failure report to the first network device. This helps the first network device analyze, based on the failure report, a reason why the terminal device unsuccessfully accesses the cell.

In an optional implementation, the second failure information further includes second indication information, the second indication information indicates that a cell in which the terminal device receives the first response message is a primary cell in the master cell group, and the first response information is information received last time before the terminal device records the second failure information.

In another optional implementation, the second failure information further includes third indication information, and the third indication information indicates whether the cell that the terminal device unsuccessfully accesses based on the first response message is a cell in the candidate cell configured based on the first conditional handover configuration information.

According to a second aspect, this application further provides a communication processing method. The communication method in this aspect corresponds to the communication method in the first aspect. The communication method in this aspect is described from a perspective of a first network device (and may be applied to a device or a chip of the first network device). In the method, the first network device receives first failure information of the second network device, where the first failure information includes information indicating that a radio link between a terminal device and the first network device fails and first conditional handover configuration information; and the first network device sends first response information to the second network device, where the first response message includes first indication information or a cell identifier of a first cell, where
The first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information. The first network device is a network device to which a master cell group accessed by the terminal device belongs, and the second network device is a network device to which a secondary cell group accessed by the terminal device belongs.

In this embodiment of this application, the first response information sent by the first network device after a radio link between the first network device and the terminal device fails and the first failure information reported by the terminal device is received includes the first indication information indicating to select the cell to access the candidate cell configured based on the first conditional handover configuration information, or includes the cell identifier of the first cell selected from the candidate cell configured based on the first conditional handover configuration information. In this way, the terminal device can access, in a timely manner, the cell in the candidate cell configured based on the first conditional handover configuration information. This helps quickly recover a radio link between the terminal device and the master cell group.

In addition, the first failure information received by the first network device includes the first conditional handover configuration information configured by the first network device for the terminal device, so that the first network device can subsequently optimize conditional handover configuration information of the terminal device based on the first failure information. This can reduce a quantity of excessively late conditional handovers, thereby reducing a probability of the radio link failure between the terminal device and the first network device.

In an optional implementation, the first network device may further receive a failure report from a third network device, and associate the first failure information with the failure report.

The failure report includes second failure information. The second failure information includes a message indication type of the first response message, and further includes that the terminal device fails to access the first cell or a second cell based on the first response message, or that the terminal device successfully accesses the first cell or a second cell based on the first response message and a radio link failure occurs within the preset duration. The message indication type of the first response message indicates that the first response message includes the first indication information or the cell identifier of the first cell. The second cell is a cell that the terminal device selects to access based on the first indication information. The third network device is a network device that the terminal device successfully re-accesses.

The first network device may further receive the failure report recorded when the terminal device fails to access the cell based on the first response information, and associate the failure report with the first failure information, so that the first network device can jointly analyze, more accurately based on the associated failure information, a cause of the radio link failure between the terminal device and the first network device and a cause of a cell access failure based on the first response information.

In an optional implementation, when the second failure information includes that the terminal device fails to access the first cell or the second cell based on the first response message, a cell radio network temporary identifier carried in the failure report is the same as a cell radio network temporary identifier carried in the first failure information, and the failure report is a failure report with a recording time closest to that of the first failure information.

When the second failure information includes that the terminal device fails to access the first cell or the second cell based on the first response message, it indicates that the terminal device unsuccessfully accesses the first cell or the second cell, that is, a serving cell of the terminal device does not change, and therefore a cell radio network temporary identifier of the terminal device does not change. In this case, the failure report and the first failure information associated by the first network device carry a same cell radio network temporary identifier, and the failure report is a failure report with a recording time closest to that of the first failure information.

In another optional implementation, when the second failure information includes that the terminal device successfully accesses the first cell or the second cell based on the first response message and the radio link failure occurs within the preset duration, a cell corresponding to a candidate cell identifier carried in the failure report is a cell in the candidate cell configured based on the first conditional handover configuration information in the first failure information, and the failure report is a failure report with a recording time closest to that of the first failure information.

When the second failure information includes that the terminal device successfully accesses the first cell or the second cell based on the first response message and the radio link failure occurs within the preset duration, it indicates that the terminal device has accessed the first cell or the second cell within a short period of time. In this case, the serving cell of the terminal device changes when the terminal device successfully accesses the first cell or the second cell, that is, the cell radio network temporary identifier of the terminal device changes. However, the first conditional handover configuration information of the terminal device does not change. Therefore, the first network device may associate the first failure information with the failure report based on a rule that the cell corresponding to the candidate cell identifier carried in the failure report is the cell in the candidate cell configured based on the first conditional handover configuration information, and the failure report is a failure report with a recording time closest to that of the first failure information.

In an optional implementation, the second failure information further includes second indication information, the second indication information indicates that a cell in which the terminal device receives the first response message is a primary cell in the master cell group, and the first response information is information received last time before the terminal device records the second failure information.

In another optional implementation, the second failure information further includes third indication information, and the third indication information indicates whether the cell that the terminal device unsuccessfully accesses based on the first response message is a cell in the candidate cell configured based on the first conditional handover configuration information.

In an optional implementation, the first network device collects statistics about a first delay, where the first delay is an average inter-station interaction delay between the first network device and the second network device. This manner helps the first network device determine, based on the first delay when the terminal device fails to perform the fast link recovery, whether a reason why the terminal device fails to perform the fast link recovery is an excessively large average inter-station interaction delay (that is, the first delay) between the first network device and the second network device.

According to a third aspect, this application further provides a communication processing method. The communication method in this aspect corresponds to the communication methods in the first aspect and the second aspect. The communication method in this aspect is described from a perspective of a second network device (and may be applied to a device or a chip of the second network device). In the method, the second network device receives first failure information from a terminal device, where the first failure information includes information indicating that a radio link between the terminal device and a first network device fails and first conditional handover configuration information. The second network device sends the first failure information to the first network device. The second network device receives first response information from the first network device, where the first response message includes the first indication information or a cell identifier of a first cell. The second network device sends the first response information to the terminal device.

The first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information. The first network device is a network device to which a master cell group accessed by the terminal device belongs, and the second network device is a network device to which a secondary cell group accessed by the terminal device belongs.

When a radio link between the terminal device and the first network device fails, the second network device forwards, to the first network device, the first failure information reported by the terminal device, and forwards, to the terminal device, the first response information sent by the first network device, so that fast radio link recovery between the terminal device and the first network device succeeds. In this way, the terminal device can access, in a timely manner based on the first response information, the cell in the candidate cell configured based on the first conditional handover configuration information. This helps quickly recover a radio link between the terminal device and the master cell group.

In an optional implementation, the second network device collects statistics about a second delay and a third delay. The second delay is an average inter-station interaction delay of exchanging the first failure information and the first response information between the second network device and the first network device, or an average inter-station interaction delay between the second network device and the first network device. The third delay is an average air interface interaction delay of control plane signaling between the second network device and the terminal device. The average air interface interaction delay is classified into an uplink delay and a downlink delay. An existing uplink delay result and downlink delay result of a user plane data packet, that is, a delay statistical result at a granularity of each data radio bearer of each terminal device, may be directly used. Alternatively, the uplink delay and the downlink delay of the control plane signaling may be obtained through statistics collection based on a granularity of each signaling radio bearer of each terminal device with reference to a manner of collecting statistics on the user plane data packet.

This manner helps the second network device send the second delay and the third delay to the first network device, and further help the first network device determine, based on the second delay and the third delay when the terminal device fails to perform the fast link recovery, a reason why the terminal device fails to perform the fast link recovery. For example, if the second delay is greater than a first preset value, the first network device determines that the reason why the terminal device fails to perform the fast link recovery may be that the second delay is excessively large. For another example, if the third delay is greater than a second preset value, the first network device determines that the reason why the terminal device fails to perform the fast link recovery may be that the third delay is excessively large.

According to a fourth aspect, an embodiment of this application further provides a communication processing method, which may be applied to a terminal device (for example, a device or a chip of the terminal device). The method includes: If a radio link between the terminal device and a first network device fails, fast link recovery between the terminal device and the first network device fails, and a first timer does not expire, the terminal device records first failure information and third failure information in a first radio link failure report. If the radio link between the terminal device and the first network device fails, the fast link recovery between the terminal device and the first network device fails, and the first timer expires, the terminal device records the first failure information in a second radio link failure report, and records the third failure information in a third radio link failure report.

The first failure information is information indicating that the radio link between the terminal device and the first network device fails, and the third failure information is information indicating that the terminal device fails to perform the fast link recovery. The first network device is a network device to which a master cell group accessed by the terminal device belongs. The first timer is started by the terminal device when the terminal device detects that the radio link between the terminal device and the first network device fails.

In this embodiment of this application, if the radio link between the terminal device and the first network device fails, and the fast link recovery between the terminal device and the first network device fails, the terminal device may determine, depending on whether the first timer expires, whether to record the first failure information and the third failure information in a same radio link failure report or separately record the first failure information and the third failure information in different radio link failure reports.

If the first timer does not expire, a cause of a fast link recovery failure between the terminal device and the first network device may be highly correlated with the radio link failure between the terminal device and the first network device. Therefore, the first failure information and the third failure information are recorded in a same radio link failure report (that is, the first radio link failure report). This helps the first network device subsequently jointly analyze, based on the first radio link failure report, a cause of the radio link failure between the terminal device and the first network device and the cause of the fast link recovery failure between the terminal device and the first network device. If the first timer expires, the cause of the fast link recovery failure between the terminal device and the first network device may be weakly associated with the radio link failure between the terminal device and the first network device. Therefore, the first failure information and the third failure information are separately recorded in different radio link failure reports.

In addition, when the fast link recovery between the terminal device and the first network device fails, if the first failure information and the third failure information are separately recorded in different radio link failure reports, only a latest radio link failure report is finally left, that is, a radio link report recording the third failure information overwrites a radio link failure report including the first failure information. The terminal device records the first failure information and the third failure information in a same radio link failure report. This can ensure record integrity of the failure information, thereby helping the first network device obtain complete radio link failure information.

In an optional implementation, the third failure information includes one or more of the following: indication information indicating whether the terminal device fails to perform the fast link recovery, an expiry cause of a third timer, a reason why a radio link failure occurs in a secondary cell group, and secondary cell group deactivation.

When the third failure information includes one or more of the foregoing information, the first network device can determine, based on content of the third failure information after receiving the third failure information, the reason why the terminal device fails to perform the fast link recovery.

In an optional implementation, when recording the first failure information and the third failure information in the first radio link failure report, the terminal device may further send the first radio link failure report to a fourth network device. Alternatively, when recording the first failure information in the second radio link failure report and recording the third failure information in the third radio link failure report, the terminal device may further send the second radio link failure report or the third radio link failure report to the fourth network device. The fourth network device is a network device that the terminal device successfully accesses after detecting that the radio link between the terminal device and the first network device fails and that the fast link recovery between the terminal device and the first network device fails. In other words, the fourth network device is a network device to which a successfully accessed cell belongs, where the cell is a selected cell obtained through cell selection after the terminal device detects that the radio link between the terminal device and the first network device fails and that the fast link recovery between the terminal device and the first network device fails and is a cell in a candidate cell configured based on first handover configuration information.

Optionally, the fourth network device is a network device that the terminal device successfully re-accesses by performing radio resource control connection reestablishment when the terminal device performs cell selection after detecting that the radio link between the terminal device and the first network device fails and that the fast link recovery between the terminal device and the first network device fails, where a selected cell is not a cell in the candidate cell configured based on the first conditional handover configuration information.

This manner helps the fourth network device forward the first radio link failure report or forward the second radio link failure report and the third radio link failure report to the first network device, and further helps the first network device analyze, based on a received radio link failure report, a cause of the radio link failure between the terminal device and the first network device and a cause of a fast link recovery failure between the terminal device and the first network device.

In an optional implementation, when the terminal device fails to perform conditional handover-based recovery by using a third cell, the terminal device may further determine a recording manner of the first failure information, the third failure information, and fourth failure information based on a second timer.

The fourth failure information is information indicating that the terminal device fails to perform the conditional handover-based recovery by using the third cell. The third cell is a cell obtained by the terminal device through cell selection after the terminal device detects that the radio link between the terminal device and the first network device fails and that the fast link recovery between the terminal device and the first network device fails, and is a cell in a candidate cell configured based on first conditional handover configuration information. The second timer is started by the terminal device when the terminal device detects that the fast link recovery between the terminal device and the first network device fails.

In an optional implementation, if the first failure information and the third failure information are recorded in the first radio link failure report, that the terminal device determines a recording manner of the first failure information, the third failure information, and fourth failure information based on a second timer includes: if the second timer does not expire, recording the fourth failure information in the first radio link failure report; and if the second timer expires, recording the fourth failure information in a fourth radio link failure report.

If the first failure information and the third failure information are recorded in the first radio link failure report, and the second timer does not expire, the terminal device records the fourth failure information in the first radio link failure report, that is, records the first failure information, the third failure information, and the fourth failure information in a same radio link failure report, so that the first network device can obtained, through joint analysis based on the first radio link failure report, the cause of the radio link failure between the terminal device and the first network device, the cause of the fast link recovery failure between the terminal device and the first network device, and a cause of a failure of the conditional handover-based recovery performed by using the third cell. If the first failure information and the third failure information are recorded in the first radio link failure report, and the second timer expires, the terminal device records the fourth failure information in a fourth radio link failure report different from the first radio link failure report, that is, does not associate the fourth failure information with the first failure information or the third failure information.

In this case, the terminal device may further send the first radio link failure report or the fourth radio link failure report to a third network device. The third network device is a network device that the terminal device successfully re-accesses. In this manner, the third network device may forward the received radio link failure report to the first network device, to help the first network device analyze, based on the received radio link failure report, a reason why the radio link failure occurs on the terminal device.

In another optional implementation, when the first failure information is recorded in the second radio link failure report, and the second failure information is recorded in the third radio link failure report, that the terminal device determines a recording manner of the first failure information, the third failure information, and fourth failure information based on a second timer includes: if the second timer does not expire, recording the fourth failure information in the second radio link failure report or the third radio link failure report; and if the second timer expires, recording the fourth failure information in a fourth radio link failure report.

If the first failure information is recorded in the second radio link failure report, the second failure information is recorded in the third radio link failure report, and the second timer does not expire, the terminal device records the fourth failure information in either of the second radio link failure report and the third radio link failure report, to help the first network device jointly analyze, based on two pieces of failure information in the first failure information, the third failure information, and the fourth failure information, a reason why the radio link failure occurs on the terminal device.

In this case, the terminal device may further send the second radio link failure report, the third radio link failure report, or the fourth radio link failure report to a third network device. The third network device is a network device that the terminal device successfully re-accesses after the terminal device fails to perform the conditional handover-based recovery. In this manner, the third network device may forward the received radio link failure report to the first network device, to help the first network device analyze, based on the received radio link failure report, a reason why the radio link failure occurs on the terminal device.

According to a fifth aspect, this application further provides a communication method. The communication method in this aspect corresponds to the communication method in the fourth aspect. The communication method in this aspect is described from a perspective of a first network device (and may be applied to a device or a chip of the first network device). In the method, the first network device receives a first radio link failure report. The first network device determines a second conditional handover configuration information of a terminal device based on the first radio link failure report.

The first radio link failure report includes first failure information and third failure information, or includes first failure information, third failure information, and fourth failure information. The first failure information is information indicating that the radio link between the terminal device and the first network device fails, the third failure information is information indicating that the terminal device fails to perform fast link recovery, and the fourth failure information is information indicating that the terminal device fails to perform conditional handover-based recovery. The first network device is a network device to which a master cell group accessed by the terminal device belongs.

In this embodiment of this application, the first network device receives the first radio link failure report, and analyzes, based on the first radio link failure report, a reason why the radio link failure occurs on the terminal device, to determine second conditional handover configuration information of the terminal device, that is, optimize original conditional handover configuration information configured by the network device for the terminal device. This helps improve a success rate of accessing a cell by the terminal device.

According to a sixth aspect, this application further provides a communication processing method. The communication method in this aspect corresponds to the communication method in the fourth aspect. The communication method in this aspect is described from a perspective of a first network device (and may be applied to a device or a chip of the first network device). In the method, the first network device receives a second radio link failure report or a third radio link failure report. The first network device determines second conditional handover configuration information of a terminal device based on the second radio link failure report or the third radio link failure report.

The second radio link failure report includes first failure information, and the third radio link failure report includes third failure information; the second radio link failure report includes first failure information and fourth failure information, and the third radio link failure report includes third failure information; or the second radio link failure report includes first failure information, and the third radio link failure report includes third failure information and fourth failure information.

The first failure information is information indicating that the radio link between the terminal device and the first network device fails, the third failure information is information indicating that the terminal device fails to perform fast link recovery, and the fourth failure information is information indicating that the terminal device fails to perform conditional handover-based recovery. The first network device is a network device to which a master cell group accessed by the terminal device belongs.

In this embodiment of this application, the first network device receives a radio link failure report generated after the radio link failure occurs on the terminal device, so that the first network device can analyze, based on the received radio link failure report, a reason why the radio link failure occurs on the terminal device, to optimize original conditional handover configuration information configured by the network device for the terminal device. This helps improve a success rate of accessing a cell by the terminal device.

According to a seventh aspect, this application further provides a communication processing method. The communication method in this aspect corresponds to the communication method in the fourth aspect. The communication method in this aspect is described from a perspective of a first network device (and may be applied to a device or a chip of the first network device). In the method, the first network device receives a first radio link failure report or a fourth radio link failure report. The first network device determines second conditional handover configuration information of a terminal device based on the first radio link failure report or the fourth radio link failure report.

The first radio link failure report includes first failure information and third failure information, and the fourth radio link failure report includes fourth failure information. The first failure information is information indicating that the radio link between the terminal device and the first network device fails, the third failure information is information indicating that the terminal device fails to perform fast link recovery, and the fourth failure information is information indicating that the terminal device fails to perform conditional handover-based recovery. The first network device is a network device to which a master cell group accessed by the terminal device belongs.

In this embodiment of this application, the first network device receives the first radio link failure report or the fourth radio link failure report generated after the radio link failure occurs on the terminal device. Therefore, the first network device may analyze, based on the first radio link failure report or the fourth radio link failure report, the reason why the radio link failure occurs on the terminal device, to optimize original conditional handover configuration information configured by the network device for the terminal device. This helps improve a success rate of accessing a cell by the terminal device.

According to an eighth aspect, this application further provides a communication processing method. The communication method in this aspect corresponds to the communication method in the fourth aspect. The communication method in this aspect is described from a perspective of a first network device (and may be applied to a device or a chip of the first network device). In the method, the first network device receives a second radio link failure report, a third radio link failure report, or a fourth radio link failure report. The first network device determines second conditional handover configuration information of a terminal device based on the received radio link failure report.

The second radio link failure report includes first failure information, the third radio link failure report includes second failure information, and the fourth radio link failure report includes fourth failure information. The first failure information is information indicating that the radio link between the terminal device and the first network device fails, the third failure information is information indicating that the terminal device fails to perform fast link recovery, and the fourth failure information is information indicating that the terminal device fails to perform conditional handover-based recovery. The first network device is a network device to which a master cell group accessed by the terminal device belongs.

In this embodiment of this application, the first network device receives the second radio link failure report, the third radio link failure report, or the fourth radio link failure report generated after the radio link failure occurs on the terminal device. Therefore, the first network device may analyze, based on the received radio link failure report, the reason why the radio link failure occurs on the terminal device, to optimize original conditional handover configuration information configured by the network device for the terminal device. This helps improve a success rate of accessing a cell by the terminal device.

According to a ninth aspect, this application further provides a communication apparatus. The communication apparatus can implement some or all functions of the terminal device according to the first aspect, implement some or all functions of the first network device according to the second aspect, implement some or all functions of the second network device according to the third aspect, implement some or all functions of the terminal device according to the fourth aspect, or implement some or all functions of the first network device according to any one of the fifth aspect to the eighth aspect. For example, functions of the communication apparatus may be functions in some or all of embodiments of the terminal device according to the first aspect of this application, or may be functions of independently implementing any embodiment of this application. The functions may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is coupled to the processing unit and the communication unit, and configured to store program instructions and data that are necessary for the communication apparatus.

In an implementation, the communication apparatus includes a processing unit and a communication unit, and the processing unit is configured to control the communication unit to perform data/signaling receiving and sending.

The communication unit is configured to send first failure information to a second network device when a radio link between the apparatus and a first network device fails, where the first failure information includes first conditional handover configuration information, the first network device is a network device to which a master cell group accessed by the apparatus belongs, and the second network device is a network device to which a secondary cell group accessed by the apparatus belongs. The communication unit is further configured to receive a first response message from the second network device, where the first response message includes first indication information or a cell identifier of a first cell.

The first indication information indicates the apparatus to select a cell to access from a candidate cell configured based on the first conditional handover configuration information, and the first cell is a cell to which the apparatus is to be handed over and is a cell in the candidate cell configured based on the first conditional handover configuration information.

In addition, for another optional implementation of the communication apparatus in this aspect, refer to related content of the first aspect. Details are not described herein again.

In another implementation, the communication apparatus includes a processing unit and a communication unit, and the processing unit is configured to control the communication unit to perform data/signaling receiving and sending.

The communication unit is configured to receive first failure information from a second network device, where the first failure information includes information indicating that a radio link between a terminal device and the first network device fails and first conditional handover configuration information, the apparatus is an apparatus to which a master cell group accessed by the terminal device belongs, and the second network device is a network device to which a secondary cell group accessed by the terminal device belongs. The communication unit is further configured to send first response information to the second network device, where the first response message includes first indication information or a cell identifier of a first cell.

The first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

**In** addition, for another optional implementation of the communication apparatus in this aspect, refer to related content of the second aspect. Details are not described herein again.

**In** still another implementation, the communication apparatus includes a processing unit and a communication unit, and the processing unit is configured to control the communication unit to perform data/signaling receiving and sending.

The communication unit is configured to receive first failure information from a terminal device, where the first failure information includes information indicating that a radio link between the terminal device and a first network device fails and first conditional handover configuration information, the first network device is a network device to which a master cell group accessed by the terminal device belongs, and the apparatus is an apparatus to which a secondary cell group accessed by the terminal device belongs. The communication unit is further configured to send the first failure information to the first network device. The communication unit is further configured to receive first response information from the first network device. The communication unit is further configured to send the first response information to the terminal device.

The first response message includes first indication information or a cell identifier of a first cell, the first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

In addition, for another optional implementation of the communication apparatus in this aspect, refer to related content of the third aspect. Details are not described herein again.

In still another implementation, the communication apparatus includes a processing unit and a communication unit, and the communication unit is configured to perform data/signaling receiving and sending.

The processing unit is configured to: if a radio link between the apparatus and a first network device fails, fast link recovery between the apparatus and the first network device fails, and a first timer does not expire, record first failure information and third failure information in a first radio link failure report. The processing unit is further configured to: if the radio link between the apparatus and the first network device fails, the fast link recovery between the apparatus and the first network device fails, and the first timer expires, record the first failure information in a second radio link failure report, and record the third failure information in a third radio link failure report.

The first failure information is information indicating that the radio link between the apparatus and the first network device fails, and the third failure information is information indicating that the apparatus fails to perform the fast link recovery. The first network device is a network device to which a master cell group accessed by the apparatus belongs. The first timer is started by the apparatus when the apparatus detects that the radio link between the apparatus and the first network device fails.

In addition, for another optional implementation of the communication apparatus in this aspect, refer to related content of the fourth aspect. Details are not described herein again.

In still another implementation, the communication apparatus includes a processing unit and a communication unit.

The communication unit is configured to receive a first radio link failure report. The processing unit is configured to determine second conditional handover configuration information of a terminal device based on the first radio link failure report.

The first radio link failure report includes first failure information and third failure information, or includes first failure information, third failure information, and fourth failure information. The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

In still another implementation, the communication apparatus includes a processing unit and a communication unit.

The communication unit is configured to receive a second radio link failure report or a third radio link failure report. The processing unit is configured to determine second conditional handover configuration information of a terminal device based on the second radio link failure report or the third radio link failure report.

The second radio link failure report includes first failure information, and the third radio link failure report includes third failure information; the second radio link failure report includes first failure information and fourth failure information, and the third radio link failure report includes third failure information; or the second radio link failure report includes first failure information, and the third radio link failure report includes third failure information and fourth failure information.

The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

In still another implementation, the communication apparatus includes a processing unit and a communication unit.

The communication unit is configured to receive a first radio link failure report or a fourth radio link failure report. The processing unit is configured to determine second conditional handover configuration information of a terminal device based on the first radio link failure report or the fourth radio link failure report.

The first radio link failure report includes first failure information and third failure information, and the fourth radio link failure report includes fourth failure information. The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

In still another implementation, the communication apparatus includes a processing unit and a communication unit.

The communication unit is configured to receive a second radio link failure report, a third radio link failure report, or a fourth radio link failure report. The processing unit is configured to determine second conditional handover configuration information of a terminal device based on the second radio link failure report, the third radio link failure report, or the fourth radio link failure report.

The second radio link failure report includes first failure information, the third radio link failure report includes second failure information, and the fourth radio link failure report includes fourth failure information. The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is a network device to which a master cell group accessed by the terminal device belongs.

In an example, the communication unit may be a transceiver or a communication interface, the storage unit may be a memory, and the processing unit may be a processor.

In an implementation, the communication apparatus includes a processor and a transceiver. The processor is configured to control the transceiver to perform data/signaling receiving and sending.

The transceiver is configured to send first failure information to a second network device when a radio link between the apparatus and a first network device fails, where the first failure information includes first conditional handover configuration information, the first network device is a network device to which a master cell group accessed by the apparatus belongs, and the second network device is a network device to which a secondary cell group accessed by the apparatus belongs. The transceiver is further configured to receive a first response message from the second network device, where the first response message includes first indication information or a cell identifier of a first cell.

The first indication information indicates the apparatus to select a cell to access from a candidate cell configured based on the first conditional handover configuration information, and the first cell is a cell to which the apparatus is to be handed over and is a cell in the candidate cell configured based on the first conditional handover configuration information.

In addition, for another optional implementation of the uplink communication apparatus in this aspect, refer to related content of the first aspect. Details are not described herein again.

In another implementation, the communication apparatus includes a processor and a transceiver. The processor is configured to control the transceiver to perform data/signaling receiving and sending.

The transceiver is configured to receive first failure information from a second network device, where the first failure information includes information indicating that a radio link between a terminal device and the apparatus fails and first conditional handover configuration information, the apparatus is an apparatus to which a master cell group accessed by the terminal device belongs, and the second network device is a network device to which a secondary cell group accessed by the terminal device belongs. The transceiver is further configured to send first response information to the second network device, where the first response message includes first indication information or a cell identifier of a first cell.

The first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

In addition, for another optional implementation of the uplink communication apparatus in this aspect, refer to related content of the second aspect. Details are not described herein again.

In still another implementation, the communication apparatus includes a processor and a transceiver. The processor is configured to control the transceiver to perform data/signaling receiving and sending.

The transceiver is configured to receive first failure information from a terminal device, where the first failure information includes information indicating that a radio link between the terminal device and a first network device fails and first conditional handover configuration information, the first network device is a network device to which a master cell group accessed by the terminal device belongs, and the apparatus is an apparatus to which a secondary cell group accessed by the terminal device belongs. The transceiver is further configured to send the first failure information to the first network device. The transceiver is further configured to receive first response information from the first network device. The transceiver is further configured to send the first response information to the terminal device.

The first response message includes first indication information or a cell identifier of a first cell, the first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

In addition, for another optional implementation of the uplink communication apparatus in this aspect, refer to related content of the third aspect. Details are not described herein again.

In still another implementation, the communication apparatus includes a processor and a transceiver. The transceiver is configured to perform data/signaling receiving and sending.

The processor is configured to: if a radio link between the apparatus and a first network device fails, fast link recovery between the apparatus and the first network device fails, and a first timer does not expire, record first failure information and third failure information in a first radio link failure report. The processor is further configured to: if the radio link between the apparatus and the first network device fails, the fast link recovery between the apparatus and the first network device fails, and the first timer expires, record the first failure information in a second radio link failure report, and record the third failure information in a third radio link failure report.

The first failure information is information indicating that the radio link between the apparatus and the first network device fails, and the third failure information is information indicating that the apparatus fails to perform the fast link recovery. The first network device is a network device to which a master cell group accessed by the apparatus belongs. The first timer is started by the apparatus when the apparatus detects that the radio link between the apparatus and the first network device fails.

In addition, for another optional implementation of the uplink communication apparatus in this aspect, refer to related content of the fourth aspect. Details are not described herein again.

In another implementation, the communication apparatus includes a processor and a transceiver.

The transceiver is configured to receive a first radio link failure report. The processor is configured to determine second conditional handover configuration information of a terminal device based on the first radio link failure report.

The first radio link failure report includes first failure information and third failure information, or includes first failure information, third failure information, and fourth failure information. The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

In another implementation, the communication apparatus includes a processor and a transceiver.

The transceiver is configured to receive a second radio link failure report or a third radio link failure report. The processor is configured to determine second conditional handover configuration information of a terminal device based on the second radio link failure report or the third radio link failure report.

The second radio link failure report includes first failure information, and the third radio link failure report includes third failure information; the second radio link failure report includes first failure information and fourth failure information, and the third radio link failure report includes third failure information; or the second radio link failure report includes first failure information, and the third radio link failure report includes third failure information and fourth failure information.

The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

In another implementation, the communication apparatus includes a processor and a transceiver.

The transceiver is configured to receive a first radio link failure report or a fourth radio link failure report. The processor is configured to determine second conditional handover configuration information of a terminal device based on the first radio link failure report or the fourth radio link failure report.

The first radio link failure report includes first failure information and third failure information, and the fourth radio link failure report includes fourth failure information. The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

In another implementation, the communication apparatus includes a processor and a transceiver.

The transceiver is configured to receive a second radio link failure report, a third radio link failure report, or a fourth radio link failure report. The processor is configured to determine second conditional handover configuration information of a terminal device based on the second radio link failure report, the third radio link failure report, or the fourth radio link failure report.

The second radio link failure report includes first failure information, the third radio link failure report includes second failure information, and the fourth radio link failure report includes fourth failure information. The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

In another implementation, the communication apparatus is a chip or a chip system. The processing unit may also be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system on a chip (system on a chip, SoC). Whether the components are separately disposed on different chips or integrated and disposed on one or more chips usually depends on a requirement of a product design. This embodiment of this application imposes no limitation on specific implementations of the foregoing components.

According to a tenth aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is outputted by the processor, other processing may further need to be performed on the information before the information arrives at the transceiver. Similarly, during receiving of the input information by the processor, the transceiver receives the information, and inputs the information to the processor. Further, after the transceiver receives the foregoing information, other processing may need to be performed on the information before the information is input into the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations such as sending and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to an eleventh aspect, this application further provides a communication system. The system includes one or more network devices and one or more terminal devices. In another possible design, the system may further include another device that interacts with the network device and the terminal device.

According to a twelfth aspect, this application provides a computer-readable storage medium, configured to store instructions. When the instructions are run by a computer, the method according to any one of the first aspect to the eighth aspect is implemented.

According to a thirteenth aspect, this application further provides a computer program product including instructions. When the instructions are run on a computer, the method according to any one of the first aspect to the eighth aspect is implemented.

According to a fourteenth aspect, this application provides a chip system. The chip system includes a processor and an interface. The interface is configured to obtain a program or instructions, and the processor is configured to invoke the program or the instructions to implement or support a terminal device in implementing a function in the first aspect, implement or support a first network device in implementing a function in the second aspect, implement or support a second network device in implementing a function in the third aspect, implement or support a terminal device in implementing a function in the fourth aspect, or implement or support a first network device in implementing a function in any one of the fifth aspect to the eighth aspect, for example, determining or processing at least one of data and information in the foregoing method. In a possible design, the chip system further includes a memory. The memory is configured to store program instructions and data that are necessary for a terminal. The chip system may include a chip, or may include a chip and another discrete component.

According to a fifteenth aspect, this application provides a communication apparatus including a processor, configured to execute a computer program or executable instructions stored in a memory. When the computer program or the executable instructions are executed, the apparatus is enabled to perform the method according to any one of the possible implementations of the first aspect to the eighth aspect.

In a possible implementation, the processor and the memory are integrated together.

In another possible implementation, the memory is located outside the communication apparatus.

For beneficial effects of the ninth aspect to the fifteenth aspect, refer to the beneficial effects of the first aspect to the eighth aspect. Details are not described herein again.

### BRIEF DESCRIPTION OF DRAWINGS

FIG. 1 is a schematic of a system structure of a communication system according to an embodiment of this application;
FIG. 2 is a schematic of a structure of a network device according to an embodiment of this application;
FIG. 3 is a schematic of a structure of another network device according to an embodiment of this application;
FIG. 4 is a schematic of a conditional handover process according to an embodiment of this application;
FIG. 5 is a schematic of an architecture of cells in a multi-radio dual connectivity according to an embodiment of this application;
FIG. 6 is a schematic of interaction of a communication method according to an embodiment of this application;
FIG. 7 is a schematic flowchart of interaction between a plurality of devices according to an embodiment of this application;
FIG. 8 is a schematic of interaction of another communication method according to an embodiment of this application;
FIG. 9 is another schematic flowchart of interaction between a plurality of devices according to an embodiment of this application;
FIG. 10 is a schematic of a structure of a communication apparatus according to an embodiment of this application; and
FIG. 11 is a schematic of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

To clearly describe embodiments, the following first briefly describes some terms or concepts involved in the present invention.

### I. Communication system

To better understand a communication method disclosed in embodiments of this application, a communication system to which embodiments of this application are applicable is described.

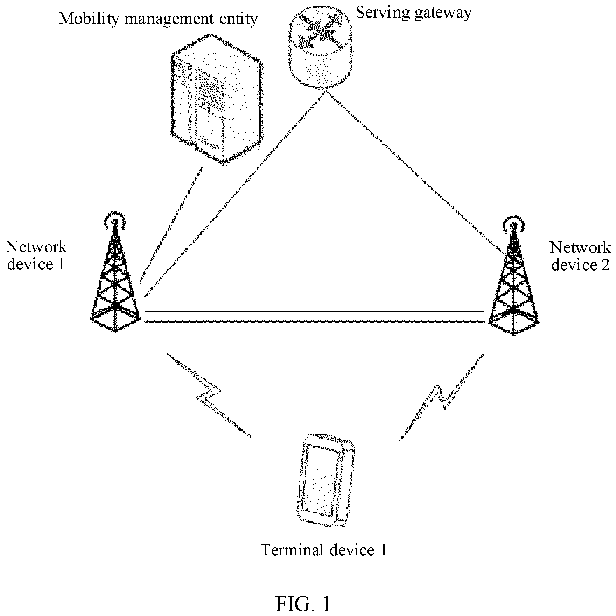

Embodiments of this application may be applied to a 5th generation mobile communication (5th generation mobile communication, 5G) system, a 6th generation mobile communication (6th generation mobile communication, 6G) system, a satellite communication system, a short-distance communication system, and other wireless communication systems. The wireless communication system may include one or more network devices and one or more terminal devices. The wireless communication system may also perform point-to-point communication. For example, a plurality of terminal devices communicate with each other. In a communication system in FIG. 1, an example in which a network device includes a network device 1 and a network device 2, a terminal device is a terminal device 1, the terminal device 1 may communicate with both the network device 1 and the network device 2, the network device 1 is connected to a mobility management entity (mobility management entity, MME) of a core network, and the network device 2 is connected to a serving gateway (serving gate way, S-WG) of the core network is used.

The wireless communication system mentioned in embodiments of this application includes but is not limited to a narrowband internet of things (narrowband internet of things, NB-IoT) system, long term evolution (long term evolution, LTE), three application scenarios of a 5G/6G mobile communication system: enhanced mobile broadband (enhanced mobile broadband, eMBB), ultra-reliable low-latency communication (ultra-reliable low-latency communication, URLLC), and massive machine-type communications (massive machine-type communications, mMTC), a wireless fidelity (wireless fidelity, Wi-Fi) system, a mobile communication system after 5G, or the like.

The network device in embodiments of this application is a device having a wireless transceiver function, and is configured to communicate with the terminal device. For example, the network device may be a radio access network (radio access network, RAN) node that connects the terminal device to a wireless network. The RAN node includes but is not limited to: a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a wireless fidelity (wireless fidelity, Wi-Fi) access point (access point, AP), integrated access and backhaul (integrated access and backhaul, IAB), or the like.

In a network structure, a network device may include a central unit (central unit, CU), a distributed unit (distributed unit, DU), or a RAN device including a CU and a DU.

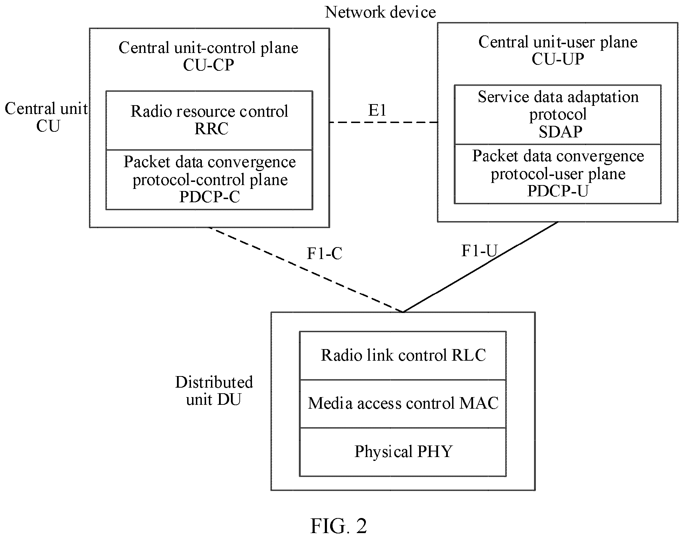

In a network structure, as shown in FIG. 2, a network device includes a CU and a DU. The CU may be divided into a control plane (control plane) and a user plane (user plane). In other words, the CU includes a CU-CP and a CU-UP. The CU-CP is responsible for a control plane function, and mainly includes radio resource control (radio resource control, RRC) and a packet data convergence protocol-control plane (packet data convergence protocol control plane, PDCP-C). The PDCP-C is mainly responsible for encryption and decryption, integrity protection, data transmission, and the like of control plane data. The CU-UP is responsible for a user plane function, and mainly includes a service data adaptation protocol (service data adaptation protocol, SDAP) and a packet data convergence protocol-user plane (packet data convergence protocol user plane, PDCP-U). The SDAP is mainly responsible for processing data of a core network and mapping the data to a bearer. The PDCP-U is mainly responsible for encryption and decryption, integrity protection, header compression, serial number maintenance, data transmission, and the like of a data plane. In addition, the CU-CP is connected to the CU-UP through an E1 interface, the CU-CP is connected to the DU through an F1-C interface, and the CU-UP is connected to the DU through an F1-U interface. Another possible implementation is that the PDCP-C is also in the CU-UP. The DU includes radio link control (radio link control, RLC), media access control (media access control, MAC), and physical (physical, PHY).

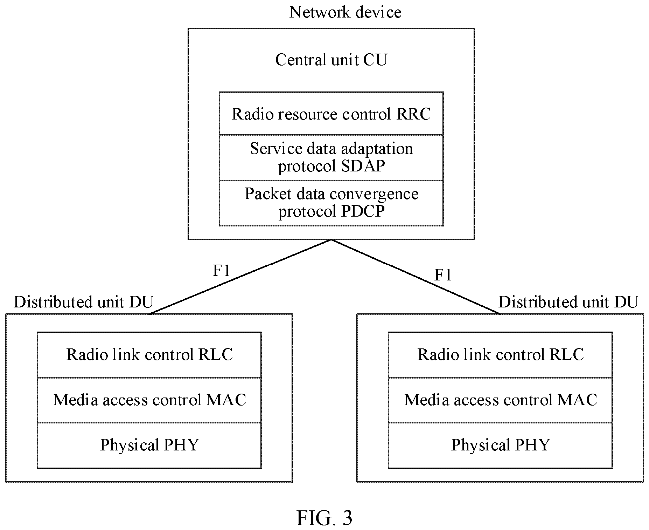

In another network structure, as shown in FIG. 3, a network device includes a CU and two DUs. The CU includes RRC, SDAP, and PDCP, and the DU includes RLC, MAC, and PHY. The CU is connected to the two DUs through an F1 interface.

The network device may communicate and interact with a core network device, to provide a communication service for a terminal device. The core network device is, for example, a device in a 5G core network (core network, CN). As a bearer network, the core network provides an interface to a data network, provides communication connection, authentication, management, and policy control for a terminal, and bearers a data service.

The terminal device in embodiments of this application is a device having a wireless transceiver function. The terminal device may be deployed on land, including an indoor or outdoor terminal device, a handheld or vehicle-mounted terminal device; may be deployed on water (for example, on a ship); or may be deployed in the air (for example, on an airplane, a balloon, or a satellite). The terminal device may be user equipment, or may be a chip or a functional module in a device. The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or a wireless terminal device in a future communication network, and may further include user equipment (user equipment, UE) and the like. This is not limited in this application.

### II. Related concepts

To better understand the communication method disclosed in embodiments of this application, related concepts in embodiments of this application are briefly described.

### 1. Conditional handover (conditional handover, CHO)

CHO mechanism: When signal quality of a source link between a source base station and a terminal device is good, the source base station sends CHO configuration information to the terminal device. The CHO configuration information includes information about one or more candidate cells (for example, a cell global identifier (cell global identifier, CGI) of the candidate cell), a CHO trigger condition, or a physical cell identifier (physical cell Identifier, PCI) of the candidate cell, and frequency information corresponding to each candidate cell. After receiving the CHO configuration information configured by the source base station, the terminal device determines whether cell quality of a candidate cell configured by using the CHO configuration information meets a CHO trigger condition, uses a cell that meets the CHO trigger condition as a target handover cell, and initiates a random access channel (random access channel, RACH) to the target handover cell. When the terminal device successfully randomly accesses the target handover cell, the terminal device sends a CHO complete message to a base station (namely, a target base station) to which the target handover cell belongs, to notify the target base station that the conditional handover between the terminal device and the target base station is completed.

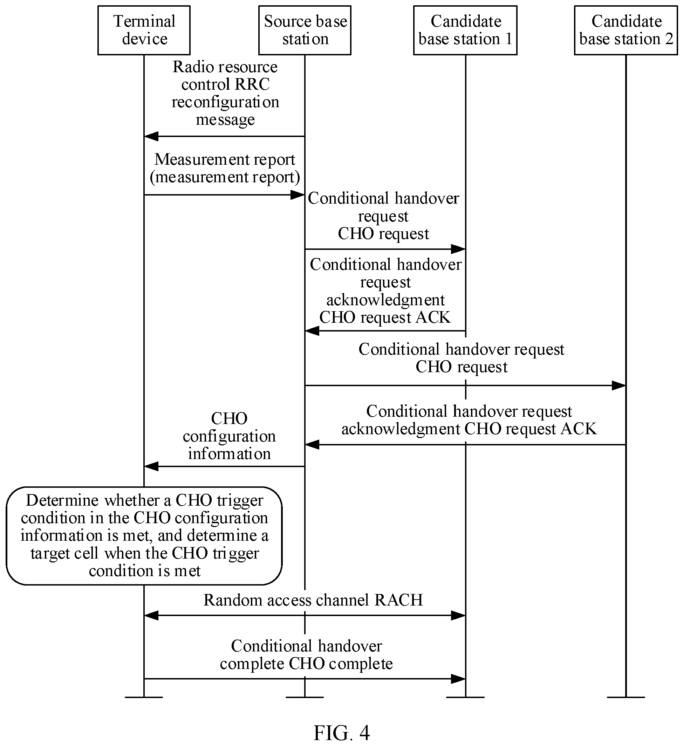

For example, FIG. 4 shows a process in which a terminal device performs conditional handover. As shown in FIG. 4, the terminal device communicates with a source base station, and the source base station sends RRC reconfiguration information to the terminal device. The RRC reconfiguration information includes measurement configuration information. The terminal device measures a neighboring cell based on the measurement configuration information, and reports a measurement result to the source base station in a measurement report (measurement report) form. The source base station determines, based on the measurement report, neighboring cells with better signal quality, and sends a CHO request to a candidate base station 1 and a candidate base station 2 to which the neighboring cells with the better signal quality belongs. If the source base station receives CHO request acknowledgment (conditional handover request acknowledgment, CHO request ACK) responses replied by both the candidate base station 1 and the candidate base station 2, the source base station completes CHO interaction with the candidate base station 1 and the candidate base station 2. The source base station sends CHO configuration information to the terminal device. The CHO configuration information includes a candidate cell 1 served by the candidate base station 1, a candidate cell 2 served by the candidate base station 2, and CHO trigger conditions (for example, the CHO trigger conditions are signal quality thresholds) separately corresponding to the candidate cell 1 and the candidate cell 2. If the terminal device determines that signal quality between the terminal device and the candidate cell 1 meets the CHO trigger condition, the terminal device initiates a RACH to the candidate base station 1. After completing the RACH, the terminal device sends a CHO complete message to the candidate base station 1, to notify the candidate base station 1 that the conditional handover between the terminal device and the candidate base station 1 is completed.

### 2. Multi-radio dual connectivity (multi-radio dual connectivity, MR-DC), master base station (master node, MN), secondary base station (secondary node, SN), primary cell (primary cell, Pcell), primary secondary cell (primary secondary cell, PSCell), master cell group (master cell group, MCG), secondary cell group (secondary cell group, SCG)

Multi-radio dual connectivity: In a wireless network, one terminal device communicates with a plurality of network devices. MR-DC may also be referred to as dual connectivity (dual-connectivity, DC). In MR-DC, a plurality of network devices that communicate with one terminal device may be network devices that belong to a same radio access technology (radio access technology, RAT). For example, the plurality of network devices are all 4G base stations or all 5G base stations. Alternatively, a plurality of network devices that communicate with one terminal device may be network devices of different RATs. For example, some of the plurality of network devices are 4G base stations, and other network devices are 5G base stations.

In MR-DC, a base station that exchanges control plane signaling with a core network is referred to as a master base station MN, and another base station connected to a terminal device is referred to as a secondary base station SN. As shown in FIG. 1, network devices connected to the terminal device 1 include the network device 1 and the network device 2, the network device 1 is connected to the mobility management entity of the core network, and both the network device 1 and the network device 2 are connected to the serving gateway. In this case, the network device 1 is a master base station MN of the terminal device 1, and the network device 2 is a secondary base station SN of the terminal device 1.

In MR-DC, there is one primary cell (Pcell) in a cell in which an MN serves a terminal device, and there is one primary secondary cell (PSCell) in a cell in which an SN serves a terminal device. The primary cell (Pcell) is a cell that is deployed at a dominant frequency and in which a terminal device initiates an initial connection establishment process or a connection reestablishment process, or a cell indicated as a primary cell in a handover process. The primary secondary cell (PSCell) is a cell in which a terminal device initiates a random access process on a secondary base station, a cell in which a terminal device skips a random access process and initiates data transmission in a secondary base station change process, or a cell of a secondary base station in which a terminal device initiates random access in a synchronous reconfiguration process.

A terminal device may receive services from a plurality of cells served by one base station. A cell group in which an MN provides a service for the terminal device is referred to as a master cell group (MCG), and a cell group in which an SN provides a service for the terminal device is referred to as a secondary cell group (SCG). Each of the MCG and the SCG includes at least one cell. When the MCG includes only one cell, the cell is a PCell of the terminal device. When the SCG includes only one cell, the cell is a PSCell of the terminal device. In new radio (new radio, NR), a PCell and a PSCell are referred to as a special cell (special cell, SpCell). When the MCG or the SCG includes a plurality of cells, all cells except the SpCell are referred to as secondary cells (secondary cells, SCells). The secondary cell is a cell working on a secondary carrier.

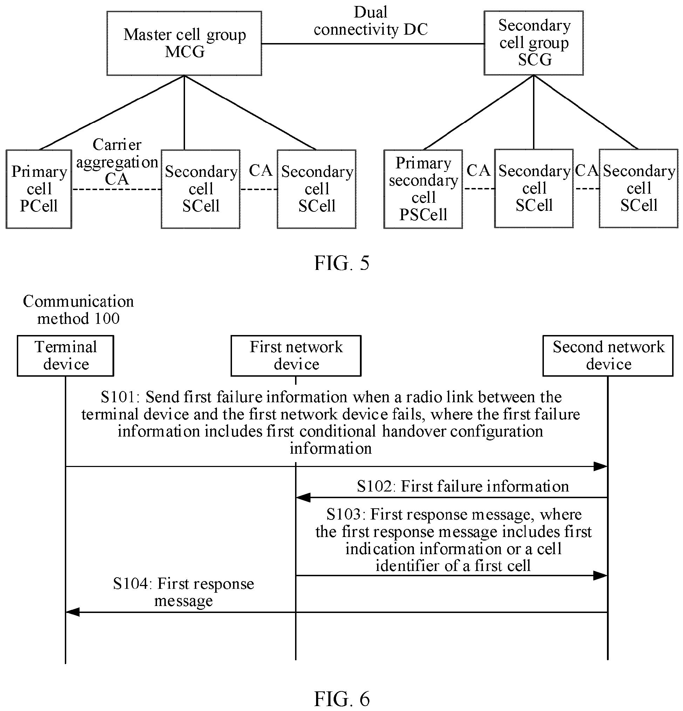

FIG. 5 is a schematic of an architecture of various cells in MR-DC. As shown in FIG. 5, when a terminal device establishes connections to a plurality of network devices, a cell group serving the terminal device includes an MCG and an SCG. The MCG includes a Pcell and another SCell, and the SCG includes a PSCell and another SCell. Carrier aggregation (carrier Aggregation, CA) is performed on the SCell and a SpCell in the cell group. In other words, the terminal device uses a plurality of cells (carriers) to perform uplink and downlink communication, to support highspeed data transmission.

### 3. Fast master cell group link recovery (fast MCG link recovery)

In the R15 protocol, when a terminal device detects a radio link failure (radio link failure, RLF) of a master cell group, that is, detects that a radio link failure occurs on a link between the terminal device and an MN, the terminal device initiates RRC connection reestablishment, to recover a connection to the MCG. However, when the terminal device reestablishes the RRC connection, data interruption for a long time is caused. For example, data interruption for 90 ms to 130 ms exists.

To prevent the terminal device from directly reestablishing the RRC connection when detecting the RLF between the terminal device and the MCG, the R16 protocol proposes a fast MCG link recovery procedure. The fast MCG link recovery procedure is as follows: When detecting that an RLF occurs between a terminal device and an MCG, that is, an RLF occurs between the terminal device and an MN, the terminal device sends failure information of a radio link connection failure between the terminal device and the MCG to the MCG via an SN, and receives response information from the MN via the SN. The response information includes cell information of a cell that the terminal device accesses or to which the terminal device is handed over. For example, the response information includes a handover (handover) message or an RRC re-release (RRCRelease) message. The terminal device may report *MCG failure information* to the SN by using split (split) signaling radio bearer (signaling radio bearer, SRB) 1 or SRB3, and start a T316 timer (timer). During timing of T316, if the terminal device receives, via the SN, the response information sent by the MN, the terminal device successfully performs the fast MCG link recovery procedure. Otherwise, the terminal device fails to perform the fast MCG link recovery procedure, and the terminal device reestablishes an RRC connection.

SRB3 uses an NR-dedicated control channel (dedicated control channel, DCCH) logical channel. A scheduling priority of SRB3 is higher than that of all data radio bearers (data radio bearers, DRBs). Default scheduling priorities of split SRB1 and SRB3 are the same, and the terminal device does not need to reorder RRC messages between SRB1 and SRB3.

The SN selects encryption and integrity protection algorithms for SRB3 and provides the algorithms in an SCG configuration to the MN. The SN determines to set up SRB3 and provides an SRB3 configuration through the SN RRC message. SRB3 setup and release are performed in secondary node addition and change procedures, and SRB3 reconfiguration is performed in a secondary node modification procedure. When a connection between the terminal device and the SCG is released, SRB3 is released.

In a procedure not involving the MN, SRB3 may be used to send SN RRC reconfiguration (*SN RRC Reconfiguration*) information, SN RRC reconfiguration complete (SN *RRC Reconfiguration Complete*) information, an SN measurement report (SN Measurement Report), SN failure information (*SN Failure Information*), an SN UE assistance information (SN *UE Assistance Information*) message, and SN IAB other information (*SN IAB Other Information*). The *SN RRC Reconfiguration Complete* message and a procedure initiation message are mapped to a same SRB. The SN measurement report message is mapped to SRB3. In a case of a configuration, regardless of whether the configuration is received directly from the SN or via the MN, no MN RRC message is not mapped to SRB3.

If split SRB1 is not configured, SRB3 may be used by the terminal device to send an encapsulated *MCG failure information* message to the MN in a *UL Information Transport MR-DC* message, and receive, in response, an encapsulated *RRC reconfiguration* message, *Mobility From NR Command* message, and RRC release message in a *DL Information Transfer MRDC* message.

In all MR-DC cases, both SRB1 and SRB2 support a split SRB, and SRB0 and SRB3 do not support a split SRB. An RRC protocol data unit (protocol data unit, PDU) on a split SRB is encrypted and integrity protected by an NR PDCP. The split SRB is configured by the MN in the secondary node addition and change procedures. An SN configuration part is provided by the SN. The terminal device may configure split SRB1, split SRB2, and SRB3 at the same time. SRB3 and an SCG branch of a split SRB can be configured independently.

### 4. Mobility robustness optimization (mobility robustness optimization, MRO) mechanism and radio link failure report (RLF report) mechanism

The MRO mechanism means that when a mobility-related exception occurs on a terminal device (for example, a handover failure of the terminal device, or a radio link failure of the terminal device in a target cell), the terminal device reports a mobility-related exception parameter to a network device, and the network device performs autonomous analysis, optimizes a network parameter, and so on based on the related exception parameter.

In a current MRO mechanism, a network device adjusts a mobility parameter based on feedback of a performance indicator. The performance indicator may be fed back by using a report such as an RLF report or a successful handover report (successful handover report, SHR). The mobility parameter is a parameter, for example, a handover threshold, used in a handover determining process. The MRO mechanism can reduce a quantity of premature and delayed handovers, ping-pong handovers, and the like in intra-frequency handover, inter-frequency handover, inter-RAT handover, or the like that are caused by inappropriate network parameter settings.

The RLF report includes but is not limited to one or more of the following information:
1. Failed primary cell identifier (*failed Pcell Identifier, failed Pcell ID*): *failed Pcell ID* includes information about a cell in which the terminal device detects an RLF, or information about a target cell with a handover failure (handover failure, HOF).
2. Connection failure type (*connection failure type*): *connection failure type* includes a failure type such as an RLF that occurs on a terminal device, a handover failure of a terminal device, or expiration of a timer (for example, a T312 timer started after a measurement report is sent) started by a terminal device.
3. Source primary cell identifier (*previous PCell ID*): *previous PCell ID* includes information about a source cell in which a terminal device receives a handover command last time.
4. Reestablishment cell identifier (*reestablishment Cell Id*): *reestablishment Cell Id* includes information about a cell in which a terminal device initiates RRC connection reestablishment after a connection failure.
5. Connection failure time (*time Conn Failure*): *time Conn Failure* includes a period of time from a moment at which a terminal device receives an HO command for the last time to a moment of a connection failure.
6. Failure time (*time Since Failure*): *time Since Failure* includes a time length that starts to be recorded from a moment of a connection failure of a terminal device, and is usually time from the connection failure of the terminal device to a moment of reporting an RLF report.
7. Radio link failure cause (*rlf-Cause*): *rlf-Cause* includes a reason why a radio link failure occurs on a terminal device, or a reason why a handover failure occurs on a terminal device. For example, *rlf-Cause* is T310 expiry, a random access problem (random Access Problem), excessive RLC retransmission failures, or the like.

The cell information mentioned above may include a CGI, and/or a PCI and a frequency. In addition, the RLF report may further include cell quality of each cell, for example, cell quality of a failed cell and/or a neighboring cell when a link failure is detected. Optionally, the cell information may further include a measurement result of the cell.

In embodiments disclosed in this application, all aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, first, second, third, and fourth are named for ease of description of differences, and do not constitute any substantive limitation, and are not limited to a sequence or the like.

In embodiments of this application, a first network device is a network device to which a master cell group accessed by a terminal device belongs, or the first network device may be considered as a source master base station (previous MN) of the terminal device. A second network device is a network device to which a secondary cell group accessed by the terminal device belongs, or the second network device may be considered as a secondary base station (SN) of the terminal device.

A third network device is a network device that the terminal device successfully re-accesses after failing to access a cell based on first response information sent by the first network device, or a network device that the terminal device successfully re-accesses after the terminal device fails to perform conditional handover-based recovery. The third network device may be understood as a network device that successfully performs RRC connection reestablishment after the terminal device fails to access the cell based on the first response information sent by the first network device; may be understood as a network device to which a successfully accessed cell belongs, where the cell is obtained through cell selection by the terminal device returning to an idle (idle) state after the terminal device fails to perform RRC connection reestablishment; may be understood as a network device with which the terminal device successfully performs conditional handover-based recovery; may be understood as a network device with which RRC connection reestablishment is successfully performed after the terminal device fails to perform the conditional handover-based recovery; or may be understood as a network device to which a successfully accessed cell belongs, where the cell is obtained through cell selection by the terminal device returning to an idle (idle) state after the terminal device fails to perform conditional handover-based recovery and fails to perform RRC connection reestablishment. The third network device may also be considered as a target MN that is successfully accessed by the terminal device by performing conditional handover-based recovery, a target MN that successfully performs RRC connection reestablishment, or a target MN to which a successfully accessed cell that is obtained through cell selection by the terminal device after the terminal device fails to perform RRC connection reestablishment belongs.

A fourth network device is a network device to which a successfully accessed cell belongs, where the cell is a selected cell obtained by the terminal device through cell selection and is a cell in a candidate cell configured based on first conditional handover configuration information.

### Embodiment 1

Embodiments of this application provide a communication method 100. FIG. 6 is a schematic of interaction of the communication method 100. The communication method 100 is described from a perspective of interaction between a terminal device, a first network device, and a second network device. The communication method 100 includes but is not limited to the following steps.

S101: The terminal device sends first failure information to the second network device when a radio link between the terminal device and the first network device fails, where the first failure information includes first conditional handover configuration information. Correspondingly, the second network device receives the first failure information from the terminal device.

For the first network device and the second network device, refer to the foregoing descriptions. Details are not described again.

That the radio link between the terminal device and the first network device fails may be understood as a radio link failure occurring on the link between the terminal device and the first network device, or may be understood as a disconnection between the terminal device and a master cell group. After the radio link between the terminal device and the first network device fails, a connection between the terminal device and a secondary cell still exists, so that the terminal device can send the first failure information to the second network device to which the secondary cell belongs, so that the second network device forwards the first failure information of the terminal device to the first network device.

The first failure information is failure information indicating that the radio link failure (radio link failure, RLF) occurs between the terminal device and the first network device. The first failure information may be sent by the terminal device to the second network device in a form of a radio link failure report (RLF report), so that the first failure information includes but is not limited to information included in the RLF report. For example, the first failure information includes *failed Pcell ID,* and *failed Pcell ID* is recorded as a cell identifier of a primary cell in the master cell group. For another example, the first failure information includes *connection failure type,* and *connection failure type* is recorded as that the terminal device performs conditional handover excessively late.

The first failure information further includes the first conditional handover configuration information, and the first conditional handover configuration information is configured for the terminal device when quality of a signal between the first network device and the terminal device is greater than a preset threshold. The first conditional handover configuration information includes one or more of one or more candidate cells, a radio air interface configuration of each cell in the one or more candidate cells, and a handover execution trigger condition of each cell.

In this manner, when the radio link failure occurs between the terminal device and the first network device, the terminal device sends the first failure information to the second network device, so that the second network device forwards the received first failure information to the first network device.

S102: The second network device sends the first failure information to the first network device. Correspondingly, the first network device receives the first failure information from the second network device.

When the radio link failure occurs between the terminal device and the first network device, the terminal device reports, to the first network device via the second network device, the first failure information that carries the first conditional handover configuration information. This manner not only enables the first network device to obtain related information of the radio link failure between the terminal device and the first network device, but also helps the first network device subsequently optimize conditional handover configuration information of the terminal device based on the first conditional handover configuration information.

S103: The first network device sends first response information to the second network device, where the first response information includes first indication information or a cell identifier of a first cell. Correspondingly, the second network device receives the first response information from the first network device.

The first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information. The cell to which the terminal device is to be handed over is a target handover cell of the terminal device. To be specific, the first cell is the target handover cell of the terminal device and is a cell in the candidate cell configured based on the first conditional handover configuration information.

The first indication information may also be understood as CHO based recovery information, to indicate the terminal device to select a to-be-accessed cell from the candidate cell configured based on the first conditional handover configuration information.

In another optional implementation, the first indication information indicates the terminal device to select a cell to access from a candidate cell configured based on the first conditional handover configuration information, and/or a conditional handover configuration identifier. In other words, the first indication information indicates the terminal device to select a cell to access from the candidate cell configured based on the first conditional handover configuration information and a corresponding radio air interface configuration, or indicates a conditional handover configuration identifier, or indicates the terminal device to use the conditional handover configuration as the first conditional handover configuration information.

In an optional implementation, the first network device collects statistics about a first delay, where the first delay is an average inter-station interaction delay between the first network device and the second network device.

In this embodiment of this application, the delay is defined as a time difference between sending a message and receiving a corresponding response message. In other words, the first delay may be a time difference between sending secondary node addition/modification/release/change request information by the first network device to the second network device and receiving response information such as a secondary node addition/modification/release/change request acknowledgment message from the second network device.

The average inter-station interaction delay may be an Xn interface delay, may be an X2 interface delay, or may be a delay based on an NG interface and/or an S1 interface. The Xn interface is a communication interface between NR stations, and the X2 interface is a communication interface between an NR station and an LTE station. If there is no Xn or X2 interface, communication between two stations is implemented through the NG interface (NR station <-> NR core network) and/or the S1 interface (4G core network <-> LTE station) of a core network.

In this manner, the first network device collects statistics on the average inter-station interaction delay between the first network device and the second network device. Therefore, the first network device can learn of first delay measurement information. This helps the first network device determine, based on the first delay measurement information when the terminal device fails to perform fast link recovery, whether a reason why the terminal device fails to perform the fast link recovery is an excessively large average inter-station interaction delay (that is, the first delay) between the first network device and the second network device. For example, the first delay is greater than a third preset value. The first network device determines that the reason why the terminal device fails to perform the fast link recovery may be that the first delay is excessively large, and properly configures a T316 threshold based on the first delay measurement information, to reduce a probability that the terminal device fails to perform the fast link recovery.

S104: The second network device sends the first response information to the terminal device. Correspondingly, the terminal device receives the first response information from the second network device.

It may be understood that, after receiving the first failure information, the first network device sends the first response information to the terminal device via the second network device. The first response message includes the first indication information or the cell identifier of the first cell, so that the terminal device can access, based on the first indication information, the cell selected from the candidate cell configured based on the first conditional handover configuration information, or directly be handed over to the first cell. When selecting, based on the first indication information, the cell to access from the candidate cell configured based on the first conditional handover configuration information, the terminal device selects, according to a cell selection rule, the cell to access from the candidate cell configured based on the first conditional handover configuration information. The cell selection rule includes a signal quality threshold. For example, when the candidate cell configured based on the first conditional handover configuration information meets the signal quality threshold for cell selection, the terminal device uses the candidate cell as the to-be-accessed cell of the terminal device.

After receiving the first response, the terminal device performs cell access or cell handover based on the first response information. When the terminal device accesses or is handed over to a cell based on the first response information, the cell to which the terminal device is to access or to be handed over is a cell in the candidate cell configured based on the first conditional handover configuration information, so that a success rate of accessing or handing over to the cell by the terminal device can be improved. This helps the terminal device access, in a timely manner, the cell in the candidate cell configured based on the first conditional handover configuration information, and helps quickly recover a radio link between the terminal device and the master cell group.

Optionally, when the first response message includes the first indication information, and the first indication information indicates the terminal device to select the cell to access the candidate cell configured based on the first conditional handover configuration information and the corresponding radio air interface configuration, the terminal device directly selects the cell to access from the candidate cell configured based on the first conditional handover configuration information, and accesses the selected cell based on the corresponding radio air interface configuration.

Optionally, the first response message includes the first indication information, and the first indication information indicates the conditional handover configuration identifier. The terminal device determines, based on the conditional handover configuration identifier, the first conditional handover configuration information corresponding to the conditional handover configuration identifier, selects the cell to access from the candidate cell configured based on the first conditional handover configuration information, and accesses the selected cell.

Optionally, when the first response information includes the first indication information, and the first indication information indicates the terminal device to use the conditional handover configuration information as the first conditional handover configuration information, the terminal device may also directly select the cell to access the candidate cell configured based on the first conditional handover configuration information, and access the selected cell.

In an optional implementation, if the terminal device fails to access the first cell or a second cell, or the terminal device successfully accesses the first cell or a second cell and a radio link failure occurs within preset duration, the terminal device performs radio resource control connection reestablishment (RRC connection reestablishment). The second cell is a cell that the terminal device selects to access based on the first indication information, that is, a to-be-accessed cell that is selected by the terminal device based on the first indication information from the candidate cell configured based on the first conditional handover configuration information.

That the terminal device fails to access the first cell or the second cell means that the terminal device does not access the first cell or the second cell. That the terminal device fails to access the first cell or the second cell may be that a selected cell is inappropriate when the terminal device selects the cell for access or handover from the cell configured based on the first conditional handover configuration information, or may be that the candidate cell configured based on the first conditional handover configuration information is inappropriate.

If the terminal device successfully accesses the first cell or the second cell and the radio link failure occurs within the preset duration, it indicates that the terminal device has successfully accessed the first cell or the second cell, but the radio link failure occurs within a short period of time. However, if the terminal device successfully accesses the first cell or the second cell and the radio link failure occurs within the preset duration, it is also considered that the terminal device unsuccessfully accesses a cell, that is, the terminal device does not establish a connection to a target network device.

Therefore, when the terminal device fails to access the first cell or the second cell, or when the terminal device successfully accesses the first cell or the second cell and the radio link failure occurs within the preset duration, the terminal device performs RRC connection reestablishment, to attempt to access a target cell in an RRC connection reestablishment manner, and recover the radio link between the terminal device and the master cell group.

In another optional implementation, if the terminal device fails to access the first cell or a second cell, or the terminal device successfully accesses the first cell or a second cell and a radio link failure occurs within preset duration, the terminal device may further record second failure information, and send a failure report to a third network device, where the failure report includes the second failure information. Correspondingly, the third network device may receive the failure report from the terminal device, and forward the failure report to the first network device. Therefore, the first network device receives the failure report from the third network device.

The second failure information includes a message indication type of the first response message, and further includes that the terminal device fails to access the first cell or the second cell based on the first response message, or that the terminal device successfully accesses the first cell or the second cell based on the first response message and the radio link failure occurs within the preset duration. The message indication type of the first response message indicates that the first response message includes the first indication information or the cell identifier of the first cell.

The message indication type of the first response message may implicitly indicate, by using a bit, that the first response information includes the first indication information or the cell identifier of the first cell. For example, when the bit indicating the message indication type of the first response message is 0, it indicates that the first response message includes the first indication information; or when the bit indicating the message indication type of the first response message is 1, it indicates that the first response message includes the cell identifier of the first cell. On the contrary, alternatively, when the bit indicating the message indication type of the first response message is 0, it may indicate that the first response message includes the cell identifier of the first cell; or when the bit indicating the message indication type of the first response message is 1, it may indicate that the first response information includes the first indication information. A specific implicit indication manner is not limited in this embodiment of this application.

Optionally, the message indication type of the first response message may alternatively indicate, in a direct indication manner, that the first response message includes the first indication information or the cell identifier of the first cell. For example, the message indication type of the first response message is directly indicated by using fourth indication information, where the fourth indication information indicates that the first response information includes the first indication information, or the fourth indication information indicates the cell identifier of the first cell.

That the second failure message further includes that the terminal device fails to access the first cell or the second cell, or that the terminal device successfully accesses the first cell or the second cell and a radio link occurs within the preset duration means: The second failure information further includes a reason why the terminal device fails to access a target cell based on the first response message. The second failure information includes but is not limited to related parameter information in the RLF report. Details are not described again.

In addition, the third network device is a network device that the terminal device successfully re-accesses. Therefore, the terminal device reports, to the first network device via the third network device, the failure report that carries the second failure information, so that the first network device obtains the failure reason why the terminal device fails to access the target cell based on the first response information.

In another optional implementation, the second failure information further includes second indication information, and the second indication information indicates that a cell in which the terminal device receives the first response message is a primary cell in the master cell group. The first response message is a last message received by the terminal device before the terminal device records the second failure information.

It can be learned from the foregoing RLF report that the second failure information may include information about a source cell from which the terminal device receives a previous command/message. A previous message received by the terminal device before the terminal device records the second failure information is the first response message, and the first response message is sent by the first network device to the terminal device via the second network device. In other words, a source cell in which the terminal device receives the first response message is the primary cell in the master cell group. Therefore, the second failure information further includes the second indication information, to report, to the first network device based on the second indication information, that the first response message that is last received before the terminal device records the second failure information is from the primary cell in the master cell group.

In an optional implementation, the terminal device directly records *previous PCell ID* in the second indication information as a cell identifier of the primary cell in the master cell group, to indicate that the source cell that receives the last message before the terminal device records the second failure information is the primary cell in the master cell group.

In another optional implementation, in a recording manner in a current protocol, the terminal device records *previous PCell ID* in the second indication information as a cell identifier of a secondary cell in a secondary cell group, adds a new information element, for example, adds a cell identifier (*previous Actual PCell Id*) of a source actual primary cell, and records *previous Actual PCell Id* as a cell identifier of the primary cell in the master cell group. In other words, the terminal device indicates, by using *previous PCell ID,* that the last message received by the terminal device before the terminal device records the second failure information is received from the secondary cell in the secondary cell group, and indicates, by using *previous Actual PCell Id,* that the last message received by the terminal device before the terminal device records the second failure information is actually from the primary cell in the master cell group.

In this manner, the terminal device may flexibly indicate, in the second indication information in the foregoing two implementations, that the first response message that is last received before the terminal device records the second failure information is from the primary cell in the master cell group.

In an optional implementation, after receiving the failure report, the first network device may further associate the first failure information with the failure report. That the first network device associates the first failure information with the failure report may mean that the first network device uses a same identifier to identify the first failure information and the failure report, so that when subsequently analyzing a cause of a radio link failure occurring on the terminal device, the first network device performs analysis based on the first failure information and the failure report marked with the same identifier.

Optionally, that the first network device associates the first failure information with the failure report may alternatively mean that the first network device records the first failure information in the failure report to obtain an associated failure report, or records the failure report in the first failure information to obtain associated failure information. Subsequently, the first network device analyzes, based on the associated failure report or the associated failure information, a cause of a radio link failure occurring on the terminal device.

A manner in which the first network device associates the first failure information with the failure report is not limited in this embodiment of this application. In other words, the manner in which the first network device associates the first failure information with the failure report includes but is not limited to the foregoing two manners.

In an optional implementation, if the first failure information includes that the terminal device fails to access the first cell or the second cell based on the first response information, it indicates that the terminal device unsuccessfully accesses the first cell or the second cell, and a serving cell of the terminal device does not change. In this case, a cell radio network temporary identifier (cell radio network temporary identifier, RNTI) of the terminal device is still an RNTI of the primary cell. Therefore, the terminal device may associate the first failure information with the failure report based on that the first failure information and the failure report carry a same RNTI and a rule in which the failure report is a failure report with a recording time closest to that of the first failure information.

To be specific, when the second failure information includes that the terminal device fails to access the first cell or the second cell based on the first response message, a cell radio network temporary identifier carried in the failure report is the same as a cell radio network temporary identifier carried in the first failure information, and the failure report is a failure report with a recording time closest to that of the first failure information.

In another optional implementation, if the second failure information includes that the terminal device successfully accesses the first cell or the second cell based on the first response message and the radio link failure occurs within the preset duration, it indicates that the terminal device has successfully accessed the first cell or the second cell based on the first response information. In this case, a serving cell of the terminal device changes, that is, an RNTI of the terminal device changes. However, the first conditional handover configuration information of the terminal device does not change, and the candidate cell configured based on the first conditional handover configuration information does not change. In this case, the terminal device may associate the first failure information with the failure report based on that a cell corresponding to a cell identifier of a candidate cell carried in the failure report is a cell in the candidate cell configured based on the first conditional handover configuration information and a rule in which the failure report is a failure report with a recording time closest to that of the first failure information.

To be specific, when the second failure information includes that the terminal device successfully accesses the first cell or the second cell based on the first response message and that the radio link failure occurs within the preset duration, a cell corresponding to a candidate cell identifier carried in the failure report is a cell in the candidate cell configured based on the first conditional handover configuration information in the first failure information, and the failure report is a failure report with a recording time closest to that of the first failure information.

The first network device associates the first failure information with the failure report, so that the first network device can optimize conditional handover configuration information of the terminal device based on associated information. For example, the reason why the radio link failure occurs between the terminal device and the first network device and that is included in the first failure information is that the terminal device performs CHO to a third cell excessively late, the second failure information carried in the failure report includes that the terminal device fails to access the first cell based on the response information, and the candidate cell configured based on the first conditional handover configuration information include a cell *a,* a cell *b,* and a cell c. If both the first cell and the third cell are the cell *a,* it indicates that the cell *a* may be an inappropriate candidate cell configured by the first network device. In this case, when optimizing the conditional handover configuration information of the terminal device, the first network device may delete the cell *a* from the candidate cell configured based on the first conditional handover configuration information. If the third cell is the cell *a,* and the first cell is the cell c, it indicates that a CHO trigger condition of the cell *a* configured based on the first conditional handover configuration information may be inappropriate. As a result, when signal quality between the terminal device and the first network device is poor, the terminal device still does not trigger CHO to the cell a. Therefore, the first network device may modify the CHO trigger condition of the cell *a* in the first conditional handover configuration information. In addition, the cell c may not be an appropriate candidate cell, and the cell c may be deleted from the first conditional handover configuration information.

In an optional implementation, the second network device may further collect statistics about a second delay and a third delay. The second delay is an average inter-station interaction delay of exchanging the first failure information and the first response information between the second network device and the first network device, or an average inter-station interaction delay between the second network device and the first network device. In other words, the second delay may be a time difference between sending the first failure message or the secondary node addition/modification/release/change request information by the first network device to the second network device and receiving the first response information or the secondary node addition/modification/release/change request acknowledgment message from the second network device. The third delay is an average air interface interaction delay of exchanging the first failure information and the first response information between the second network device and the terminal device, or an average air interface interaction delay between the second network device and the terminal device, and the average air interface interaction delay is classified into an uplink delay and a downlink delay. The uplink delay includes two segments, for example, a D1 segment and a D2 segment. The D1 segment is reported by the terminal device, and the D2 segment is obtained through statistics collection by the second network device.

The second delay may be understood as a time difference between sending the first failure information by the second network device to the first network device and receiving the first response information from the first network device, or may be understood as a time difference between sending a message by the first network device and receiving corresponding response information from the second network device, where the message includes but is not limited to secondary node addition/modification/release/change request information. The third delay may be understood as a time difference between sending the first failure information by the terminal device to the second network device to receiving the first failure information by the second network device, or may be understood as a time difference between sending the first response information by the second network device to the terminal device to receiving the first response information by the terminal device. Alternatively, the third delay may be an uplink delay and a downlink delay of control plane signaling between the terminal device and the second network device. An uplink delay result and a downlink delay result of an existing user plane data packet may be directly used, that is, a delay statistics result at a granularity of each data radio bearer of each terminal device may be directly used. Alternatively, the uplink delay and the downlink delay of the control plane signaling may be obtained through statistics collection based on a granularity of each signaling radio bearer of each terminal device with reference to a manner of collecting statistics on the user plane data packet.

In this manner, the second network device collects statistics on the second delay and the third delay, so that the second network device can learn of second delay measurement information and third delay measurement information. This helps the second network device send the second delay measurement information and the third delay measurement information to the first network device, so that the first network device determines, based on the second delay in the second delay measurement information and the third delay in the third delay measurement information when the terminal device fails to perform the fast link recovery, the reason why the terminal device fails to perform the fast link recovery. For example, if the second delay is greater than a first preset value, the first network device determines that the reason why the terminal device fails to perform the fast link recovery may be that the second delay is excessively large. For another example, if the third delay is greater than a second preset value, the first network device determines that the reason why the terminal device fails to perform the fast link recovery may be that the third delay is excessively large.

After obtaining the second delay measurement information and/or the third delay measurement information, the first network device properly configures a T316 threshold based on the second delay measurement information and/or the third delay measurement information, to reduce a probability that the terminal device fails to perform the fast link recovery.

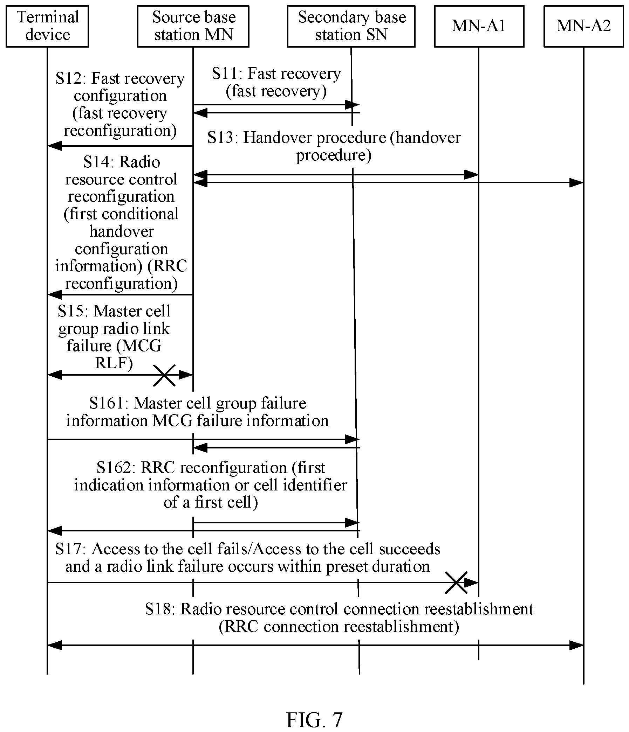

The following uses an example in which the first network device is a source MN of the terminal device, the second network device is an SN of the terminal device, and both the third network device and a fourth network device are network devices to which the candidate cell configured based on the first conditional handover configuration information belongs, namely, an MN-A1, and an MN-A2, to describe in detail an interaction process between the terminal device, the source MN, the SN, the MN-A1, and the MN-A1 in the communication method 100. FIG. 7 is a flowchart of interaction between the terminal device, the source MN, the SN, the MN-A1, and the MN-A1. As shown in FIG. 7, interaction between the terminal device, the source MN, the SN, the MN-A1, and the MN-A1 includes the following steps.

S11: The source MN interacts with the SN in a fast recovery (fast recovery) procedure.

The MN may interact with the SN in the fast recovery procedure through split SRB 1 or SRB3. The fast recovery procedure means that after a radio link failure occurs between the terminal device and the source MN, the terminal device may interact with the source MN via the SN.

S12: The source MN configures the fast recovery procedure for the terminal device.

The MN configures the fast recovery procedure for the terminal device, that is, sends fast recovery reconfiguration information to the terminal device, so that the terminal device can subsequently perform the fast recovery procedure. To be specific, after the radio link failure occurs between the terminal device and the source MN, the terminal device may exchange information with the source MN via the SN.

S13: The source MN interacts with the MN-A1 and the MN-A2 separately in a handover procedure (handover procedure). To be specific, the source MN sends a handover request to the MN-A1 and the MN-A2 separately, to request that the terminal device can perform conditional handover to the MN-A1 and the MN-A1. After receiving acknowledgment information sent by the MN-A1 and the MN-A2 separately, the source MN indicates that the terminal device can subsequently perform conditional handover to the MN-A1 and the MN-A1.

S14: The source MN sends RRC reconfiguration information to the terminal device, to configure first conditional handover configuration information for the terminal device based on the RRC reconfiguration information. The first conditional handover configuration information includes cell identifiers of the MN-A2 and an MN-A3, and CHO trigger conditions respectively corresponding to the cells of the MN-A2 and the MN-A3.

S15: The terminal device detects that the radio link failure occurs between the terminal device and the source MN, that is, a radio link failure (MCG RLF) occurs between the terminal device and an MCG. The radio link failure between the terminal device and the source MN may be caused by excessively late CHO performed by the terminal device.

S161: The terminal device sends *MCG failure information* (that is, first failure information) to the SN. Correspondingly, the SN forwards the *MCG failure information* to the source MN.

The *MCG failure information* includes the first conditional handover configuration information. Optionally, the *MCG failure information* does not include the first conditional handover configuration information.

S162: The source MN sends an RRC reconfiguration message (that is, a first response message) to the SN, where the RRC reconfiguration message includes first indication information or a cell identifier of a first cell. Correspondingly, the SN forwards the RRC reconfiguration message to the terminal device, and the terminal device receives the RRC reconfiguration information from the SN.

Optionally, the RRC reconfiguration message does not include the first indication information or the cell identifier of the first cell, but includes a legacy HO CMD or legacy RRC release.

The legacy HO CMD is a handover command sent by the source MN to the terminal device after the source MN selects an appropriate cell to initiate a handover request and a target MN responds to the handover request. Therefore, the terminal device performs handover and data forwarding based on the handover command.

The legacy RRC release is RRC connection release information sent by the source MN to the terminal device. After receiving the legacy RRC release, the terminal device performs cell reselection. After determining that a new cell meeting a cell reselection condition exists, the terminal device attempts to camp on the new cell.

If the terminal device receives the RRC reconfiguration message from the source MN, it indicates that the terminal device successfully performs the fast recovery procedure.

S17: The terminal device fails to access the MN-A1 based on the RRC reconfiguration information, or the terminal device successfully accesses the MN-A1 and a radio link failure occurs within preset duration. The MN-A1 is the first cell, or a cell selected for access based on the first indication information from the candidate cell configured based on the first conditional handover configuration information. In other words, the terminal device fails to access a target cell based on the RRC reconfiguration information.

S18: The terminal device performs RRC connection reestablishment, and successfully reestablishes an RRC connection to the MN-A2.

Optionally, the terminal device records second failure information indicating that access to the MN-A1 fails based on the RRC reconfiguration information, or access to the MN-A1 succeeds and the radio link failure occurs within the preset duration, and reports a failure report to the source MN via the MN-A2, where the failure report includes the second failure information.

Optionally, the second failure information further includes third indication information. The third indication information indicates whether a cell that the terminal device unsuccessfully accesses based on the first response message is a cell in the candidate cell configured based on the first conditional handover configuration information, that is, indicates whether a cell that the terminal device fails to access or a cell that the terminal device successfully accesses and in which the radio link failure occurs within the preset duration is a cell in the candidate cell configured based on the first conditional handover configuration information.

In other words, the terminal device may further report, to the first network device by using the failure report, whether a cell that fails to access is a cell in the candidate cell configured based on the first conditional handover configuration information, so that the first network device determines whether the candidate cell configured based on the first conditional handover configuration information is an appropriate cell, or determines whether a CHO trigger condition of the candidate cell configured based on the first conditional handover configuration information is appropriate.

In an optional implementation, a previous PCell ID recorded in the first failure information is a cell identifier of a primary cell served by the source MN. Optionally, the previous PCell ID recorded in the first failure information is a cell identifier of a secondary cell served by the SN, and the first failure information further records *previous Actual PCell Id,* and *previous Actual PCell Id* is recorded as a cell identifier of a primary cell served by the source MN.

In an optional implementation, the source MN associates the first failure information with the failure report. For an association manner, refer to the descriptions in S 104. Details are not described again.

In this embodiment of this application, when the radio link between the terminal device and the first network device fails, the terminal device may receive, when performing radio link recovery with the first network device, the first indication information that indicates to select the cell to access the candidate cell configured based on the first conditional handover configuration information, or receive the cell identifier of the first cell selected from the candidate cell configured based on the first conditional handover configuration information. In this way, the terminal device can access, in a timely manner, the cell in the candidate cell configured based on the first conditional handover configuration information. This helps quickly recover a radio link between the terminal device and the master cell group.

In addition, the first failure information reported by the terminal device to the first network device after the radio link between the terminal device and the first network device fails includes the first conditional handover configuration information, to help the first network device subsequently optimize conditional handover configuration information of the terminal device based on the first failure information. This can reduce a quantity of excessively late conditional handovers, thereby reducing a probability of the radio link failure between the terminal device and the first network device.

### Embodiment 2

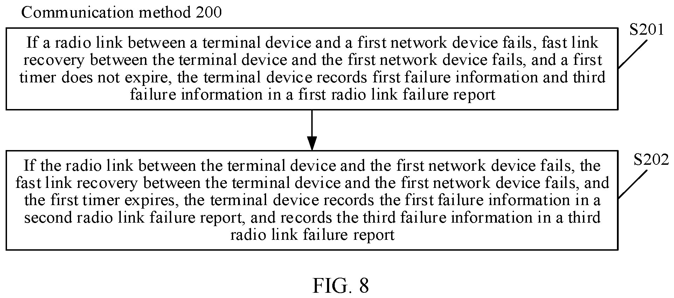

Embodiments of this application further provide a communication method 200. FIG. 8 is a schematic of interaction of the communication method 200. The communication method 200 is also described from a perspective of interaction between a terminal device, a first network device, and a second network device. The communication method 200 includes but is not limited to the following steps.

S201: If a radio link between the terminal device and the first network device fails, fast link recovery between the terminal device and the first network device fails, and a first timer does not expire, the terminal device records first failure information and third failure information in a first radio link failure report.

The first failure information is information indicating that the radio link between the terminal device and the first network device fails, and the third failure information is information indicating that the terminal device fails to perform the fast link recovery. The first timer is started by the terminal device when the terminal device detects that the radio link between the terminal device and the first network device fails. Running duration of the first timer may be configured by the first network device for the terminal device, or may be preset by the terminal device.

The first failure information includes related information of the radio link failure between the terminal device and the first network device, that is, the first failure information includes but is not limited to a related parameter in the foregoing RLF report. Optionally, the first failure information may further include first conditional handover configuration information. The first conditional handover configuration information is related information that is configured by the first network device for the terminal device and that is for performing conditional handover. When the first failure information includes the first conditional handover configuration information, the first network device can subsequently optimize conditional handover configuration information of the terminal device.

The third failure information includes related information of a fast link recovery failure between the terminal device and the first network device, that is, the third failure information also includes but is not limited to the related parameter in the foregoing RLF report.

Optionally, the third failure information may further include one or more of the following: indication information indicating whether the terminal device fails to perform the fast link recovery, an expiry cause of a third timer, a reason why a radio link failure occurs in a secondary cell group, and secondary cell group deactivation. The third timer is a T316 timer.

When the third failure information includes one or more of the foregoing information, the first network device can determine, based on content of the third failure information after receiving the third failure information, the reason why the terminal device fails to perform the fast link recovery.

When the terminal device detects that the radio link between the terminal device and the first network device fails, that is, a radio link failure occurs in a radio link between the terminal device and an MCG, the terminal device starts the first timer, and performs the fast link recovery with the first network device. That the terminal device performs the fast link recovery with the first network device means that the terminal device reports, to the first network device via the second network device, the first failure information when the radio link between the terminal device and the first network device fails. The first network device forwards first response information to the terminal device via the second network device after receiving the first failure information, and the terminal device receives the first response information from the second network device.

The first response information may be one of the following information: first indication information, a cell identifier of a first cell, a legacy HO CMD, or legacy RRC release. The first indication information indicates the terminal device to select a cell to access from a candidate cell configured based on the first conditional handover configuration information, and/or a conditional handover configuration identifier. The first cell is a cell to which the terminal device is to be handed over and is a cell in the candidate cell configured based on the first conditional handover configuration information and/or a cell that is in the candidate cell configured based on the first conditional handover configuration information and that corresponds to the conditional handover configuration identifier, and the cell to which the terminal device is to be handed over is also a target handover cell.

For the first indication information, the cell identifier of the first cell, the legacy HO CMD, and the legacy RRC release, refer to the foregoing communication method 100. Details are not described again.

The fast link recovery between the terminal device and the first network device refers to the foregoing fast MCG link recovery procedure, and a specific process thereof is not described again. That the fast link recovery between the terminal device and the first network device fails may be that the terminal device unsuccessfully sends the first failure information to the first network device, or the terminal device does not receive the first response information from the first network device. That the terminal device unsuccessfully sends the first failure information to the first network device may be that the terminal device unsuccessfully sends the first failure information to the second network device, and therefore the second network device cannot forward the first failure information to the first network device; or may be that the terminal device successfully sends the first failure information to the second network device, but the second network device unsuccessfully forwards the first failure information to the first network device. That the terminal device does not receive the first response information from the first network device may be that the first network device unsuccessfully sends the first response information to the second network device, and therefore the second device cannot forward the first response information to the terminal device, or may be that the first network device successfully sends the first response information to the second network device, but the second network device unsuccessfully forwards the first response information to the terminal device, and therefore the terminal device does not receive the first response information.

If the fast link recovery between the terminal device and the first network device fails during timing of the first timer, it indicates that there is a high probability that the fast link recovery failure between the terminal device and the first network device is associated with the radio link failure between the terminal device and the first network device. Therefore, the first failure information and second failure information are recorded in a same radio link failure report (that is, the first radio link failure report), so that the first network device can jointly analyze, based on the first radio link failure report, a cause of the radio link failure between the terminal device and the first network device and the cause of the fast link recovery failure between the terminal device and the first network device.

Compared with discarding, by the terminal device, the first failure information of the radio link failure between the terminal device and the first network device when the fast link recovery between the terminal device and the first network device fails, this manner helps ensure recording integrity of failure information, and further helps improve reliability of performing related cause analysis by the first network device.

When the terminal device records the first failure information and the third failure information in the same radio link failure report, to distinguish the first failure information from the third failure information, the terminal device may record the first failure information and the third failure information in the first radio link failure report by using different identifiers.

For example, the first failure information recorded in the first radio link failure report includes: *first failed PCell Id, first connection Failure Type, first previous PCell Id, first rlf-Cause,* and the like, and the third failure information recorded in the first radio link failure report includes: *second failed PCell Id, second connection Failure Type, second previous PCell Id, second rlf-Cause,* and the like. It can be learned that, in the first radio link failure report, the first failure information and the third failure information may be distinguished by using identifiers of "first" and "second".

S202: If the radio link between the terminal device and the first network device fails, the fast link recovery between the terminal device and the first network device fails, and the first timer expires, the terminal device records the first failure information in a second radio link failure report, and records the third failure information in a third radio link failure report.

After the radio link between the terminal device and the first network device fails, the terminal device starts the first timer, and performs the fast link recovery with the first network device. If the first timer expires and the fast link recovery between the terminal device and the first network device fails, it indicates that the fast link recovery between the terminal device and the first network device fails only after a long time after the radio link failure occurs between the terminal device and the first network device. It is possible that the cause of the fast link recovery failure between the terminal device and the first network device is weakly associated with the cause of the radio link failure between the terminal device and the first network device. Therefore, the terminal device separately records the first failure information and the third failure information, to be specific, records the first failure information in the second radio link failure report and records the third failure information in the third radio link failure report.

In this manner, when the fast link recovery between the terminal device and the first network device fails, the terminal device records the first failure information in the second radio link failure report while recording the third failure information in the third radio link failure report, and does not discard the first failure information. Therefore, integrity of failure information can be ensured, and reliability of performing related cause analysis by the first network device is improved.

After S201 or S202, the terminal device performs cell selection. When a cell selected by the terminal device is a cell in the candidate cell configured based on the first conditional handover configuration information, the terminal device performs conditional handover-based recovery (CHO based recovery), that is, accesses the selected cell. If the terminal device successfully accesses the selected cell, a network device to which the accessed cell belongs is a fourth network device. In other words, the fourth network device is a network device that the terminal device successfully accesses after detecting that the radio link between the terminal device and the first network device fails and that the fast link recovery between the terminal device and the first network device fails.

If the terminal device records the first failure information and the third failure information in the first radio link failure report, the terminal device may further send the first radio link failure report to the fourth network device. Correspondingly, the fourth network device forwards the first radio link failure report to the first network device, and the first network device obtains the first radio link failure report. Therefore, the first network device may jointly analyze, based on the first radio link failure report, the reason why the radio link failure occurs between the terminal device and the first network device and the reason why the fast link recovery between the terminal device and the first network device fails.

If the terminal device records the first failure information in the second radio link failure report and records the third failure information in the third radio link failure report, the terminal device may further send the second radio link failure report or the third radio link failure report to the fourth network device. It may be understood that the radio link failure report sent by the terminal device is a latest radio link failure report stored by the terminal device. That is, if the latest radio link failure report stored by the terminal device is the second radio link failure report, the terminal device sends the second radio link failure report to the fourth network device; and if the latest radio link failure report stored by the terminal device is the third radio link failure report, the terminal device sends the third radio link failure report to the fourth network device.

Correspondingly, the fourth network device forwards the second radio link failure report or the third radio link failure report to the first network device. Therefore, the first network device may analyze, based on the second radio link failure report or the third radio link failure report, the reason why the radio link failure occurs between the terminal device and the first network device and the reason why the fast link recovery between the terminal device and the first network device fails.

In another optional implementation, when the terminal device fails to perform conditional handover-based recovery by using a third cell, the terminal device determines a recording manner of the first failure information, the third failure information, and fourth failure information based on a second timer.

The third cell is a cell obtained by the terminal device through cell selection after the terminal device detects that the radio link between the terminal device and the first network device fails and that the fast link recovery between the terminal device and the first network device fails, and is a cell in the candidate cell configured based on the first conditional handover configuration information. The fourth failure information is information indicating that the terminal device fails to perform the conditional handover-based recovery by using the third cell, and the fourth failure information includes but is not limited to a related parameter included in the foregoing RLF report. The second timer is started by the terminal device when the terminal device detects that the fast link recovery between the terminal device and the first network device fails. Running duration of the second timer may be configured by the first network device for the terminal device, or may be preset by the terminal device.

In other words, when the fast link recovery between the terminal device and the first network device fails, the terminal device starts the second timer, and performs cell selection. If the third cell selected by the terminal device is a cell configured based on the first conditional handover, the terminal device performs conditional handover recovery. When the terminal device fails to perform the conditional handover-based recovery by using the third cell during timing of the second timer, the terminal device determines the recording manner of the first failure information, the third failure information, and the fourth failure information depending on whether the second timer expires.

The following describes, based on a recording manner of the first failure information and the second failure implementation, the case in which the terminal device determines the recording manner of the first failure information, the third failure information, and the fourth failure information.

Case 1: Recording manner of the first failure information, the third failure information, and the fourth failure information when the first failure information and the third failure information are recorded in the first radio link failure report:

When the first failure information and the third failure information are recorded in the first radio link failure report, that the terminal device determines the recording manner of the first failure information, the third failure information, and the fourth failure information based on the second timer includes: if the second timer does not expire, recording the fourth failure information in the first radio link failure report; and if the second timer expires, recording the fourth failure information in a fourth radio link failure report.

If the second timer does not expire, it indicates that a reason why the terminal device fails to perform the conditional handover-based recovery by using the third cell may be associated with the first failure information and the third failure information. Therefore, the terminal device records the first failure information, the third failure information, and the fourth failure information in the first radio link failure report. If the second timer expires and the terminal device fails to perform the conditional handover-based recovery by using the third cell, it indicates that the reason why the terminal device fails to perform the conditional handover-based recovery by using the third cell may be weakly associated with the first failure information and the third failure information. Therefore, the terminal device separately records the fourth failure information in the fourth radio link failure report.

When recording the first failure information, the third failure information, and the fourth failure information in the first radio link failure report, the terminal device may distinguish the first failure information, the third failure information, and the fourth failure information by using different identifiers. For example, the first failure information recorded in the first radio link failure report includes: *first failed PCell Id, first connection Failure Type, first previous PCell Id, first rlf-Cause,* and the like, the third failure information recorded in the first radio link failure report includes: *second failed PCell Id, second connection Failure Type, second previous PCell Id,* and *second rlf-Cause,* and the fourth failure information recorded in the first radio link failure report includes: *third failed PCell Id, third connection Failure Type, third previous PCell Id, second rlf-Cause,* and the like.

If the terminal device records the first failure information, the third failure information, and the fourth failure information in the first radio link failure report, the terminal device may further send the first radio link failure report to a third network device. Correspondingly, the third network device sends the first radio link failure report to the first network device. The first network device receives the first radio link failure report from the third network device, and determines second conditional handover configuration information of the terminal device based on the first radio link failure report. The third network device is a network device that the terminal device successfully re-accesses after the terminal device fails to perform the conditional handover-based recovery.

That the terminal device determines the second conditional handover configuration information of the terminal device based on the first radio link failure report means that the conditional handover configuration information of the terminal device is optimized based on the first radio link failure report, to reduce a probability that the radio link failure occurs between the terminal device and the first network device, reduce a probability that the terminal device accesses a cell, and reduce a probability that the terminal device fails to perform the conditional handover-based recovery.

If the terminal device records the first failure information and the second failure information in the first radio link failure report, and records the fourth failure information in the fourth radio link failure report, the terminal device may further send the first radio link failure report or the fourth radio link failure report to the third network device. The radio link failure report sent by the terminal device is a latest radio link failure report stored by the terminal device. Correspondingly, the third network device sends the first radio link failure report or the fourth radio link failure report to the first network device. The first network device receives the first radio link failure report or the fourth radio link failure report from the third network device, and determines the second conditional handover configuration information of the terminal device based on the first radio link failure report or the fourth radio link failure report, that is, optimizes the conditional handover configuration information of the terminal device based on the first radio link failure report or the fourth radio link failure report.

Case 2: Recording manner of the first failure information, the third failure information, and the fourth failure information when the first failure information is recorded in the second radio link failure report and the second failure information is recorded in the third radio link failure report:
That the terminal device determines the recording manner of the first failure information, the third failure information, and the fourth failure information based on the second timer includes: if the second timer does not expire, recording the fourth failure information in the second radio link failure report or the third radio link failure report; and if the second timer expires, recording the fourth failure information in the fourth radio link failure report.

If the terminal device records the first failure information and the fourth failure information in the second radio link failure report and records the third failure information in the third radio link failure report, or records the first failure information in the second radio link failure information and records the third failure information and the fourth failure information in the third radio link, the terminal device may further send the second radio link failure report or the third radio link failure report to the third network device. Correspondingly, the third network device sends the second radio link failure report or the third radio link failure report to the first network device. The first network device receives the second radio link failure report or the third radio link failure report from the third network device, and determines the second conditional handover configuration information of the terminal device based on the received radio link failure report, that is, optimizes the conditional handover configuration information of the terminal device.

If the terminal device records the first failure information in the second radio link failure report, records the third failure information in the third radio link failure report, and records the fourth failure information in the fourth radio link failure report, the terminal device may further send the second radio link failure report, the third radio link failure report, or the fourth radio link failure report to the third network device. The radio link failure report sent by the terminal device herein is also a latest radio link failure report stored by the terminal device. Correspondingly, the third network device sends the second radio link failure report, the third radio link failure report, or the fourth radio link failure report to the first network device. The first network device receives the second radio link failure report, the third radio link failure report, or the fourth radio link failure report from the third network device, and determines the second conditional handover configuration information of the terminal device based on the received radio link failure report.

In this embodiment of this application, regardless of how the terminal device records the first failure information, the third failure information, and the fourth failure information, "first", "second", and "third" may be used to identify information in the first failure information, the third failure information, and the fourth failure information respectively.

The terminal device records a plurality of pieces of failure information in a same radio link failure report, that is, the plurality of pieces of failure information may be associated in the same radio link failure report, so that the first network device jointly analyzes, based on the plurality of pieces of failure information in the same radio link failure report, a cause of a radio link failure occurring on the terminal device. For example, the first network device analyzes whether several consecutive radio link failures occurring on the terminal device are all caused by inappropriate first conditional handover configuration information of the terminal device. In addition, currently, when the terminal device records current failure information after a current radio link failure, previously recorded failure information or a previously recorded radio link failure report is cleared. Consequently, the first network device cannot obtain each piece of failure information or each radio link failure report recorded when the terminal device encounters a plurality of radio link failures. Therefore, in this embodiment of this application, the terminal device records, in a same radio link failure report, a plurality of pieces of failure information in cases of radio link failures, so that each piece of failure information recorded when the terminal device encounters a plurality of radio link failures can be ensured, and integrity of the failure information recorded when the radio link failure occurs can be ensured, thereby improving reliability of analyzing, by the first network device, a cause of the radio link failure of the terminal device.

After S201 or S202, the terminal device performs cell selection. When a cell selected by the terminal device is not a cell in the candidate cell configured based on the first conditional handover configuration information, or when the terminal device fails to perform the conditional handover recovery by using the third cell, the terminal device performs RRC connection reestablishment.

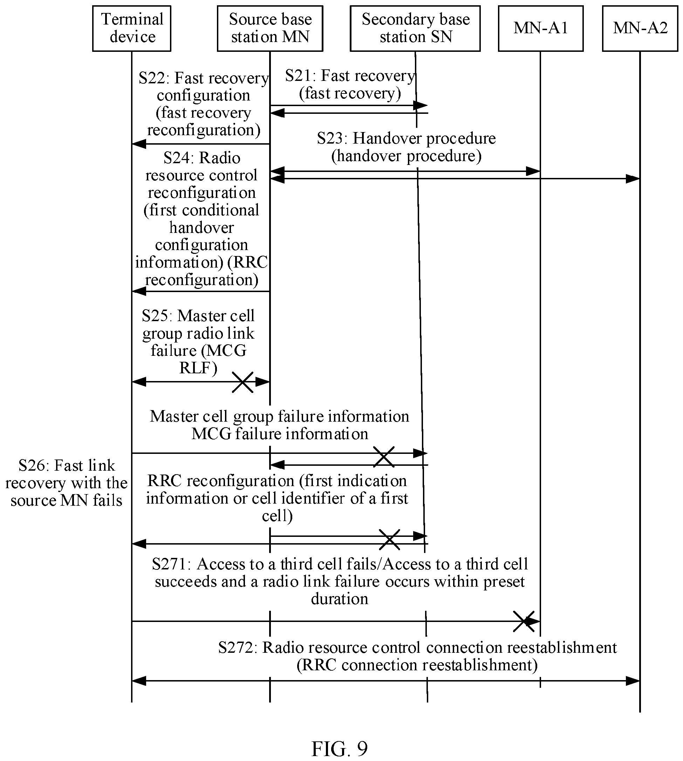

The following uses an example in which the first network device is a source MN of the terminal device, the second network device is an SN of the terminal device, and both the third network device and a fourth network device are network devices to which the candidate cell configured based on the first conditional handover configuration information belongs, namely, an MN-A1, and an MN-A2, to describe in detail an interaction process between the terminal device, the source MN, the SN, the MN-A1, and the MN-A1 in the communication method 200. FIG. 9 is a flowchart of interaction between the terminal device, the source MN, the SN, the MN-A1, and the MN-A1. As shown in FIG. 9, interaction between the terminal device, the source MN, the SN, the MN-A1, and the MN-A1 includes the following steps.

S21: The source MN interacts with the SN in a fast recovery (fast recovery) procedure.

S22: The source MN configures the fast recovery procedure for the terminal device.

S23: The source MN interacts with the MN-A1 and the MN-A2 separately in a handover procedure (handover procedure). To be specific, the source MN sends a handover request to the MN-A1 and the MN-A2 separately, to request that the terminal device can perform conditional handover to the MN-A1 and the MN-A1. After receiving acknowledgment information sent by the MN-A1 and the MN-A2 separately, the source MN indicates that the terminal device can subsequently perform conditional handover to the MN-A1 and the MN-A1.

S24: The source MN sends RRC reconfiguration information to the terminal device, to configure first conditional handover configuration information for the terminal device based on the RRC reconfiguration information.

S25: The terminal device detects that the radio link failure occurs between the terminal device and the source MN, that is, a radio link failure (MCG RLF) occurs between the terminal device and an MCG.

For S21 to S25, refer to the implementations of S11 to S15. Details are not described again.

S26: Fast link recovery between the terminal device and the source MN fails.

That the fast link recovery between the terminal device and the source MN fails may mean that the terminal device does not receive a first response message before T316 expires. A most definite reason why the terminal device fails to perform fast link recovery (fast recovery) is that T316 expires. Further, a reason why T316 expires may be detailed as one or more of the following: An SCG is deactivated, an SCG radio link fails, and air interface and inter-station interaction delays are excessively large.

The inter-station interaction delay includes the first delay, the second delay, and the third delay in the communication method 100. The inter-station interaction delay may be obtained through statistics collection by the source MN (namely, the first network device), or may be obtained through statistics collection by the SN (namely, the second network device).

Optionally, the SN may further collect statistics about a time period from sending the first failure message to receiving the first response message, or a time difference between sending, by the SN, a secondary node addition/modification/release/change request message and receiving, by the SN, a secondary node addition/modification/release/change request acknowledgment message from the MN in an interaction procedure between the SN and the MN.

Optionally, the source MN may further collect statistics about a time period from sending a control plane message to the SN to receiving an acknowledgment message from the SN. For example, the source MN collects statistics about a time period from sending an addition/modification request message to the SN to receiving an addition/modification acknowledgment message from the SN.

As described above, the SN may collect statistics about an air interface delay (namely, the third delay) of interaction with the terminal device. The air interface delay may be classified into an uplink delay and a downlink delay. Optionally, an uplink delay and a downlink delay of a user plane data packet may be directly used for the uplink delay and the downlink delay, that is, delay statistics are collected at a granularity of each data radio bearer of each terminal device. Optionally, with reference to a manner of collecting statistics about a user plane data packet, statistics about an uplink delay and a downlink delay of control plane signaling may be collected at a granularity of each signaling radio bearer of each terminal device.

For a downlink delay of a user plane data packet, the downlink delay includes one or more of a PDCP layer delay (for example, a CU-UP delay), an F1-U delay, a hybrid automatic repeat request (Hybrid Automatic Repeat Request, HARQ) transmission or retransmission delay, and an RLC side delay (for example, a processing delay). The CU-UP delay may be a time period from receiving a data packet by the CU-UP through an NG-U to sending the data packet to a CU-DU. For an uplink delay of a user plane data packet, the uplink delay includes two processes: an uplink terminal-side delay D1 and an uplink access-network-side delay D2, where the uplink terminal-side delay is a packet data convergence protocol (packet data convergence protocol, PDCP) buffer delay on a terminal device side. A time period corresponding to the PDCP buffer delay is a time period from receiving a data packet by the terminal device from an upper layer of a PDCP layer to obtaining, by the terminal device, an uplink grant for sending the data packet. The delay also includes a delay from sending a scheduling request by the terminal device or performing random access to obtaining the uplink grant by the terminal device. In other words, the uplink terminal-side delay D1 is duration from receiving data by the terminal device to sending the data by the terminal device to an access network device. The terminal-side delay is measured and reported by the terminal device to the access network device. The uplink access-network-side delay D2 includes a HARQ transmission or retransmission delay D2.1, an RLC-side delay D2.2, an F1 interface delay D2.3, and a PDCP reordering delay D2.4. D2.1 may be defined as a time period from sending a data packet by the terminal device to successfully receiving the data packet by the access network device. D2.2 may be defined as a time period from correctly receiving a first part of an RLC service data unit (service data unit, SDU) to sending the RLC SDU to the PDCP layer or a CU. D2.3 may be defined as: subtracting a feedback delay of a data packet on the DU side from a time period from sending the packet by the CU to a distributed unit (distributed unit, DU) to receiving a transmission status of the packet by the CU from the DU, and then an obtained value is divided by 2. D2.4 may be defined as a time period from receiving a PDCP SDU to sending the PDCP SDU to an upper layer.

The source MN may determine, based on the foregoing collected inter-station interaction delay (for example, the first delay, the second delay, and the third delay) measurement information, the reason why the terminal device fails to perform the fast recovery. If the source MN determines that the reason why the terminal device fails to perform the fast recovery is that the air interface and inter-station interaction delays are excessively large, the source MN may obtain inter-station interaction delay measurement information and air interface interaction delay measurement information, and properly configure a T316 threshold based on the delay measurement information, to reduce a probability that the terminal device fails to perform the fast recovery.

The reason why the fast link recovery between the terminal device and the source MN fails may be that the terminal device unsuccessfully sends *MCG failure information* to the source MN in S261, or may be that the source MN unsuccessfully sends the first response information to the terminal device in S262.

When detecting that the radio link failure occurs between the terminal device and the source MN, the terminal device starts a first timer; and if the fast link recovery between the terminal device and the source MN fails during timing of the first timer, the terminal device records first failure information of the radio link failure between the terminal device and the source MN and third failure information of the fast link recovery between the terminal device and the source MN in a first radio link failure report.

If the first timer expires, the terminal device records the first failure information and the third failure information in a second radio link failure report and a third radio link failure report respectively.

The third failure information includes one or more of the following: indication information indicating whether the terminal device fails to perform the fast link recovery, an expiry cause of a third timer, a reason why a radio link failure occurs in a secondary cell group, and secondary cell group deactivation.

It may be understood that the third failure information includes one or more of the following: indicating whether the terminal device has performed fast recovery, T316 expiry cause (fast recovery failure cause), SCG rlf, and SCG deactivated. If a fast recovery failure cause is an SCG RLF, the third failure information records SCG RLF failure information.

S271: The terminal device performs conditional handover-based recovery by using a third cell.

After the fast link recovery between the terminal device and the source MN fails, cell selection is performed. When a selected cell is a candidate cell configured based on the first conditional handover configuration information, the conditional handover-based recovery is performed. Therefore, the third cell is a cell selected after the fast link recovery between the terminal device and the source MN fails, and is a cell in the candidate cell configured based on the first conditional handover configuration information.

When the fast link recovery between the terminal device and the source MN fails, the terminal device starts a second timer, and performs conditional handover-based recovery by using the third cell during timing of the second timer. In this case, fourth failure information indicating a failure of the conditional handover-based recovery and the first failure information and/or the third failure information are recorded in a same radio link failure report. After the second timer expires, if the terminal device fails to perform the conditional handover-based recovery by using the third cell, the fourth failure information of the failure of the conditional handover-based recovery is recorded separately from the first failure information and the third failure information, that is, the three pieces of information are recorded in different radio link failure reports.

S272: The terminal device performs RRC connection reestablishment.

After the fast link recovery between the terminal device and the source MN fails, if the selected cell is not a candidate cell configured based on the first conditional handover configuration information, the terminal device performs RRC connection reestablishment. Alternatively, after the fast link recovery between the terminal device and the source MN fails, if the selected cell is a candidate cell configured based on the first conditional handover configuration information, the conditional handover-based recovery is performed, but the conditional handover-based recovery fails, and the terminal device also performs RRC connection reestablishment.

In this embodiment of this application, if the radio link between the terminal device and the first network device fails, the fast link recovery between the terminal device and the first network device fails, and the first timer does not expire, the terminal device records the first failure information and the third failure information in a same radio link failure report (that is, the first radio link failure report), so that the first network device can jointly analyze, based on the first radio link failure report, the cause of the radio link failure between the terminal device and the first network device and the cause of the fast link recovery failure between the terminal device and the first network device. In this way, a probability of the radio link failure between the terminal device and the first network device is reduced, and a probability of the failure of the fast link recovery between the terminal device and the first network device is reduced.

If the radio link between the terminal device and the first network device fails, the fast link recovery between the terminal device and the first network device fails, and the first timer expires, it indicates that the radio link failure between the terminal device and the first network device is weakly associated with the fast link recovery between the terminal device and the first network device. The first failure information and the third failure information may be separately recorded in different radio link failure reports, so that the first network device analyzes, based on the first failure information or the third failure information, the cause of the radio link failure between the terminal device and the first network device and the reason why the fast link recovery between the terminal device and the first network device fails.

In addition, when the fast link recovery between the terminal device and the first network device fails, if the first failure information and the third failure information are separately recorded in different radio link failure reports, only a latest radio link failure report is finally left, that is, a radio link report recording the third failure information overwrites a radio link failure report including the first failure information. The terminal device records the first failure information and the third failure information in a same radio link failure report. This can ensure record integrity of the failure information, thereby helping the first network device obtain complete radio link failure information.

For the technical solution described above, the following further describes a corresponding apparatus implementation solution.

To implement the functions in the foregoing methods provided in embodiments of this application, the terminal device, the first network device, and the second network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

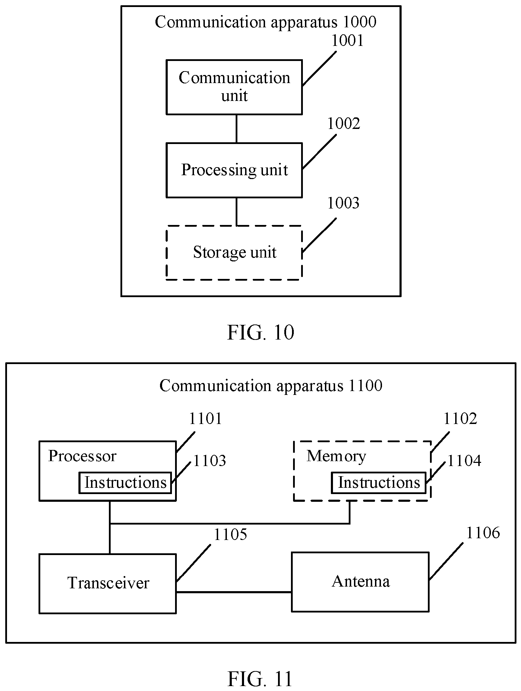

FIG. 10 shows a communication apparatus 1000 according to an embodiment of this application. The communication apparatus 1000 may be a component (for example, an integrated circuit or a chip) of a terminal device, may be a component (for example, an integrated circuit or a chip) of a first network device, or may be a component (for example, an integrated circuit or a chip) of a second network device. Alternatively, the communication apparatus 1000 may be another communication unit, configured to implement the methods in method embodiments of this application. The communication apparatus 1000 may include a communication unit 1001 and a processing unit 1002. Optionally, the apparatus may further include a storage unit 1003.

In a possible design, for example, one or more units in FIG. 10 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The communication apparatus 1000 has a function of implementing a transmitting end or a receiving end described in embodiments of this application. For example, the communication apparatus 1000 includes a corresponding module, unit, or means (means) used for the transmitting end to perform the steps that are related to the transmitting end and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

In a possible design, the communication apparatus 1000 may include the processing unit 1002 and the communication unit 1001.

The communication unit 1001 is configured to send first failure information to a second network device when a radio link between the apparatus and a first network device fails, where the first failure information includes first conditional handover configuration information, the first network device is a network device to which a master cell group accessed by the apparatus belongs, and the second network device is a network device to which a secondary cell group accessed by the terminal device belongs. The communication unit 1001 is further configured to receive a first response message from the second network device, where the first response message includes first indication information or a cell identifier of a first cell.

The first indication information indicates the apparatus to select a cell to access from a candidate cell configured based on the first conditional handover configuration information, and the first cell is a cell to which the apparatus is to be handed over and is a cell in the candidate cell configured based on the first conditional handover configuration information.

In an optional implementation, the processing unit 1002 is configured to: if the apparatus fails to access the first cell or a second cell, or the apparatus successfully accesses the first cell or a second cell and a radio link failure occurs within preset duration, perform radio resource control connection reestablishment, where the second cell is a cell that the apparatus selects to access based on the first indication information.

In an optional implementation, the processing unit 1002 is further configured to: record second failure information, and send a failure report to a third network device, where the failure report includes the second failure information, and the third network device is a network device that the apparatus successfully re-accesses. The second failure information includes a message indication type of the first response message, and further includes that the apparatus fails to access the first cell or the second cell based on the first response message, or that the apparatus successfully accesses the first cell or the second cell based on the first response message and the radio link failure occurs within the preset duration. The message indication type of the first response message indicates that the first response message includes the first indication information or the cell identifier of the first cell.

In an optional implementation, the second failure information further includes second indication information, and the second indication information indicates that a cell in which the apparatus receives the first response message is a primary cell in the master cell group.

This embodiment of this application and the foregoing method embodiment are based on a same concept, and bring same technical effects. For a specific principle, refer to the descriptions of the foregoing embodiment. Details are not described again.

In another possible design, the communication apparatus 1000 may include the processing unit 1002 and the communication unit 1001.

The communication unit 1001 is configured to receive first failure information from a second network device, where the first failure information includes information indicating that a radio link between a terminal device and the apparatus fails and first conditional handover configuration information, the apparatus is an apparatus to which a master cell group accessed by the terminal device belongs, and the second network device is a network device to which a secondary cell group accessed by the terminal device belongs. The communication unit 1001 is further configured to send first response information to the second network device, where the first response message includes first indication information or a cell identifier of a first cell.

The first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

In an optional implementation, the communication unit 1001 is further configured to receive a failure report from a third network device, where the failure report includes second failure information. The processing unit 1002 is configured to associate the first failure information with the failure report.

The third network device is a network device that the terminal device successfully re-accesses. The second failure information includes a message indication type of the first response message, and further includes that the terminal device fails to access the first cell or a second cell based on the first response message, or that the terminal device successfully accesses the first cell or a second cell based on the first response message and a radio link failure occurs within preset duration. The second cell is a cell that the terminal device selects to access based on the first indication information, the message indication type of the first response message indicates that the first response message includes the first indication information or the cell identifier of the first cell.

In an optional implementation, when the second failure information includes that the terminal device fails to access the first cell or the second cell based on the first response message, a cell radio network temporary identifier carried in the failure report is the same as a cell radio network temporary identifier carried in the first failure information, and the failure report is a failure report with a recording time closest to that of the first failure information.

In another optional implementation, when the second failure information includes that the terminal device successfully accesses the first cell or the second cell based on the first response message and that the radio link failure occurs within the preset duration, a cell corresponding to a candidate cell identifier carried in the failure report is a cell in the candidate cell configured based on the first conditional handover configuration information in the first failure information, and the failure report is a failure report with a recording time closest to that of the first failure information.

In an optional implementation, the second failure information further includes second indication information, and the second indication information indicates that a cell in which the terminal device receives the first response message is a primary cell in the master cell group.

In an optional implementation, the processing unit 1002 is further configured to collect statistics about a first delay, where the first delay is an average inter-station interaction delay between the first network device and the second network device.

This embodiment of this application and the foregoing method embodiment are based on a same concept, and bring same technical effects. For a specific principle, refer to the descriptions of the foregoing embodiment. Details are not described again.

In still another possible design, the communication apparatus 1000 may include the processing unit 1002 and the communication unit 1001.

The communication unit 1001 is configured to receive first failure information from a terminal device, where the first failure information includes information indicating that a radio link between the terminal device and a first network device fails and first conditional handover configuration information, the first network device is a network device to which a master cell group accessed by the terminal device belongs, and the apparatus is an apparatus to which a secondary cell group accessed by the terminal device belongs.

The communication unit 1001 is further configured to send the first failure information to the first network device. The communication unit 1001 is further configured to receive first response information from the first network device. The communication unit 1001 is further configured to send the first response information to the terminal device.

The first response message includes first indication information or a cell identifier of a first cell, the first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

In an optional implementation, the processing unit 1002 is further configured to: collect statistics about a second delay, where the second delay is an average inter-station interaction delay of exchanging the first failure information and the first response information between the second network device and the first network device, or an average inter-station interaction delay between the second network device and the first network device; and collect statistics about a third delay, where the third delay is an average air interface interaction delay of exchanging the first failure information and the first response information between the second network device and the terminal device, or an average air interface interaction delay between the second network device and the terminal device, and the average air interface interaction delay is classified into an uplink delay and a downlink delay.

This embodiment of this application and the foregoing method embodiment are based on a same concept, and bring same technical effects. For a specific principle, refer to the descriptions of the foregoing embodiment. Details are not described again.

In still another possible design, the communication apparatus 1000 may include the processing unit 1002 and the communication unit 1001.

The processing unit 1002 is configured to: if a radio link between the apparatus and a first network device fails, fast link recovery between the apparatus and the first network device fails, and a first timer does not expire, record first failure information and third failure information in a first radio link failure report. The processing unit 1002 is configured to: if the radio link between the apparatus and the first network device fails, the fast link recovery between the apparatus and the first network device fails, and the first timer expires, record the first failure information in a second radio link failure report, and record the third failure information in a third radio link failure report.

The first failure information is information indicating that the radio link between the apparatus and the first network device fails, and the third failure information is information indicating that the apparatus fails to perform the fast link recovery. The first network device is a network device to which a master cell group accessed by the apparatus belongs. The first timer is started by the apparatus when the apparatus detects that the radio link between the apparatus and the first network device fails.

In an optional implementation, the third failure information includes one or more of the following: indication information indicating whether the terminal device fails to perform the fast link recovery, an expiry cause of a third timer, a reason why a radio link failure occurs in a secondary cell group, and secondary cell group deactivation.

In an optional implementation, the communication unit 1001 is further configured to send the first radio link failure report, the second radio link failure report, or the third radio link failure report to a fourth network device.

The fourth network device is a network device that the apparatus successfully accesses after detecting that the radio link between the apparatus and the first network device fails and that the fast link recovery between the apparatus and the first network device fails.

In an optional implementation, the processing unit 1002 is further configured to: when conditional handover-based recovery performed by using a third cell fails, determine a recording manner of the first failure information, the third failure information, and fourth failure information based on a second timer. The fourth failure information is information indicating that the terminal device fails to perform the conditional handover-based recovery by using the third cell. The third cell is a cell obtained by the apparatus through cell selection after the apparatus detects that the radio link between the apparatus and the first network device fails and that the fast link recovery between the apparatus and the first network device fails, and is a cell in the candidate cell configured based on the first conditional handover configuration information. The second timer is started by the apparatus when the apparatus detects that the fast link recovery between the apparatus and the first network device fails.

In an optional implementation, if the first failure information and the third failure information are recorded in the first radio link failure report, the processing unit 1002 is configured to determine the recording manner of the first failure information, the third failure information, and the fourth failure information based on the second timer, and is specifically configured to: if the second timer does not expire, record the fourth failure information in the first radio link failure report; and if the second timer expires, record the fourth failure information in a fourth radio link failure report.

In another optional implementation, the first failure information is recorded in the second radio link failure report, and the second failure information is recorded in the third radio link failure report. The processing unit 1002 is configured to determine the recording manner of the first failure information, the third failure information, and the fourth failure information based on the second timer, and is specifically configured to: if the second timer does not expire, record the fourth failure information in the second radio link failure report or the third radio link failure report; and if the second timer expires, record the fourth failure information in a fourth radio link failure report.

In an optional implementation, the communication unit 1001 is further configured to send the first radio link failure report or the fourth radio link failure report to a third network device, where the third network device is a network device that the apparatus successfully re-accesses.

In another optional implementation, the communication unit 1001 is further configured to send the second radio link failure report, the third radio link failure report, or the fourth radio link failure report to a third network device, where the third network device is a network device that the apparatus successfully re-accesses after the apparatus fails to perform the conditional handover-based recovery.

This embodiment of this application and the foregoing method embodiment are based on a same concept, and bring same technical effects. For a specific principle, refer to the descriptions of the foregoing embodiment. Details are not described again.

In still another possible design, the communication apparatus 1000 may include the processing unit 1002 and the communication unit 1001.

The communication unit 1001 is configured to receive a first radio link failure report. The processing unit 1002 is configured to determine second conditional handover configuration information of a terminal device based on the first radio link failure report.

The first radio link failure report includes first failure information and third failure information, or includes first failure information, third failure information, and fourth failure information. The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

This embodiment of this application and the foregoing method embodiment are based on a same concept, and bring same technical effects. For a specific principle, refer to the descriptions of the foregoing embodiment. Details are not described again.

In still another possible design, the communication apparatus 1000 may include the processing unit 1002 and the communication unit 1001.

The communication unit 1001 is configured to receive a second radio link failure report or a third radio link failure report. The processing unit 1002 is configured to determine second conditional handover configuration information of a terminal device based on the second radio link failure report or the third radio link failure report. The second radio link failure report includes first failure information, and the third radio link failure report includes third failure information; the second radio link failure report includes first failure information and fourth failure information, and the third radio link failure report includes third failure information; or the second radio link failure report includes first failure information, and the third radio link failure report includes third failure information and fourth failure information.

The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is a network device to which a master cell group accessed by the terminal device belongs.

This embodiment of this application and the foregoing method embodiment are based on a same concept, and bring same technical effects. For a specific principle, refer to the descriptions of the foregoing embodiment. Details are not described again.

In still another possible design, the communication apparatus 1000 may include the processing unit 1002 and the communication unit 1001.

The communication unit 1001 is configured to receive a first radio link failure report or a fourth radio link failure report. The processing unit 1002 is configured to determine second conditional handover configuration information of a terminal device based on the first radio link failure report or the fourth radio link failure report. The first radio link failure report includes first failure information and third failure information, and the fourth radio link failure report includes fourth failure information. The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

This embodiment of this application and the foregoing method embodiment are based on a same concept, and bring same technical effects. For a specific principle, refer to the descriptions of the foregoing embodiment. Details are not described again.

In still another possible design, the communication apparatus 1000 may include the processing unit 1002 and the communication unit 1001.

The communication unit 1001 is configured to receive a second radio link failure report, a third radio link failure report, or a fourth radio link failure report. The processing unit 1002 is configured to determine second conditional handover configuration information of a terminal device based on the second radio link failure report, the third radio link failure report, or the fourth radio link failure report. The second radio link failure report includes first failure information, the third radio link failure report includes second failure information, and the fourth radio link failure report includes fourth failure information. The first failure information is information indicating that the radio link between the terminal device and the apparatus fails, the third failure information is information indicating that the terminal device fails to perform fast link recovery, and the fourth failure information is information indicating that the terminal device fails to perform conditional handover-based recovery. The apparatus is an apparatus to which a master cell group accessed by the terminal device belongs.

This embodiment of this application and the foregoing method embodiment are based on a same concept, and bring same technical effects. For a specific principle, refer to the descriptions of the foregoing embodiment. Details are not described again.

An embodiment of this application further provides a communication apparatus 1100. FIG. 11 is a schematic of a structure of the communication apparatus 1100. The communication apparatus 1100 may be a terminal device, may be a chip, a chip system, a processor, or the like that supports a terminal device in implementing the foregoing method. Alternatively, the communication apparatus 1100 may be a first network device, or may be a chip, a chip system, a processor, or the like that supports a first network device in implementing the foregoing method. Alternatively, the communication apparatus 1100 may be a second network device, or may be a chip, a chip system, a processor, or the like that supports a second network device in implementing the foregoing method. The apparatus may be configured to implement the methods described in the foregoing method embodiments. For details, refer to the descriptions in the foregoing method embodiments.

The communication apparatus 1100 may include one or more processors 1101. The processor 1101 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 1100 may include one or more memories 1102. The memory may store instructions 1104, and the instructions may be run on the processor 1101, to enable the communication apparatus 1100 to perform the methods described in the foregoing method embodiments. Optionally, the memory 1102 may further store data. The processor 1101 and the memory 1102 may be disposed separately, or may be integrated together.

The memory 1102 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a portable read-only memory (Compact Disc Read-Only Memory, CD-ROM), or the like.

Optionally, the communication apparatus 1100 may further include a transceiver 1105 and an antenna 1106. The transceiver 1105 may be referred to as a transceiver unit, a transceiver machine, a transceiver circuit, or the like, and is configured to implement a transceiver function. The transceiver 1105 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 1100 is a terminal device. The transceiver 1105 is configured to perform S101 and S104 in the communication method 100, and the processor 1101 is configured to perform S201 and S202 in the communication method 200.

The communication apparatus 1100 is a first network device. The transceiver 1105 is configured to perform S102 and S103 in the communication method 100.

The communication apparatus 1100 is a second network device. The transceiver 1105 is configured to perform S101, S102, S103, and S104 in the communication method 100.

In another possible design, the processor 1101 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 1101 may store instructions 1103. When the instructions 1103 are executed on the processor 1101, the communication apparatus 1100 is enabled to perform the methods described in the foregoing method embodiments. The instructions 1103 may be fixed in the processor 1101. In this case, the processor 1101 may be implemented by hardware.

In still another possible design, the communication apparatus 1100 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in embodiments of this application is not limited thereto, and a structure of the communication apparatus may not be limited by FIG. 11. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, like a modem (modulator); or
(4) a module that can be embedded in another device.

In this embodiment of this application, the communication apparatus and the chip may further perform implementations of the communication apparatus 1000. A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the method embodiments shown in the communication method 100 and the communication method 200 are based on a same concept, and bring same technical effects. For a specific principle, refer to the descriptions of the embodiments shown in the communication method 100 and the communication method 200. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes one or more network devices and one or more terminal devices. In another possible design, the system may further include another device that interacts with the network device and the terminal device in the solutions provided in this application.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by a terminal device, first failure information to a second network device when a radio link between the terminal device and a first network device fails, wherein the first failure information comprises first conditional handover configuration information, the first network device is a network device to which a master cell group accessed by the terminal device belongs, and the second network device is a network device to which a secondary cell group accessed by the terminal device belongs; and
receiving, by the terminal device, a first response message from the second network device, wherein the first response message comprises first indication information or a cell identifier of a first cell, wherein
the first indication information indicates the terminal device to select a cell to access from a candidate cell configured based on the first conditional handover configuration information; and
the first cell is a cell to which the terminal device is to be handed over and is a cell in the candidate cell configured based on the first conditional handover configuration information.

2. The method according to claim 1, wherein the method further comprises:
if the terminal device fails to access the first cell or a second cell, or the terminal device successfully accesses the first cell or a second cell and a radio link failure occurs within preset duration, performing, by the terminal device, radio resource control connection reestablishment, wherein
the second cell is a cell that the terminal device selects to access based on the first indication information.

3. The method according to claim 2, wherein the method further comprises:
recording, by the terminal device, second failure information, and sending a failure report to a third network device, wherein the failure report comprises the second failure information, and the third network device is a network device that the terminal device successfully re-accesses, wherein
the second failure information comprises a message indication type of the first response message, and further comprises that the terminal device fails to access the first cell or the second cell based on the first response message, or that the terminal device successfully accesses the first cell or the second cell based on the first response message and the radio link failure occurs within the preset duration; and
the message indication type of the first response message indicates that the first response message comprises the first indication information or the cell identifier of the first cell.

4. The method according to claim 3, wherein the second failure information further comprises second indication information, and the second indication information indicates that a cell in which the terminal device receives the first response message is a primary cell in the master cell group.

5. A communication method, wherein the method comprises:
receiving, by a first network device, first failure information from a second network device, wherein the first failure information comprises information indicating that a radio link between a terminal device and the first network device fails and first conditional handover configuration information, the first network device is a network device to which a master cell group accessed by the terminal device belongs, and the second network device is a network device to which a secondary cell group accessed by the terminal device belongs; and
sending, by the first network device, first response information to the second network device, wherein the first response message comprises first indication information or a cell identifier of a first cell, wherein
the first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

6. The method according to claim 5, wherein the method further comprises:
receiving, by the first network device, a failure report from a third network device, wherein the failure report comprises second failure information; and
associating, by the first network device, the first failure information with the failure report, wherein
the third network device is a network device that the terminal device successfully re-accesses;
the second failure information comprises a message indication type of the first response message, and further comprises that the terminal device fails to access the first cell or a second cell based on the first response message, or that the terminal device successfully accesses the first cell or a second cell based on the first response message and a radio link failure occurs within preset duration; and
the second cell is a cell that the terminal device selects to access based on the first indication information, and the message indication type of the first response message indicates that the first response message comprises the first indication information or the cell identifier of the first cell.

7. The method according to claim 6, wherein when the second failure information comprises that the terminal device fails to access the first cell or the second cell based on the first response message,
a cell radio network temporary identifier carried in the failure report is the same as a cell radio network temporary identifier carried in the first failure information, and the failure report is a failure report with a recording time closest to that of the first failure information.

8. The method according to claim 6, wherein when the second failure information comprises that the terminal device successfully accesses the first cell or the second cell based on the first response message and the radio link failure occurs within the preset duration,
a cell corresponding to a candidate cell identifier carried in the failure report is a cell in the candidate cell configured based on the first conditional handover configuration information in the first failure information, and the failure report is a failure report with a recording time closest to that of the first failure information.

9. The method according to any one of claims 6 to 8, wherein
the second failure information further comprises second indication information, and the second indication information indicates that a cell in which the terminal device receives the first response message is a primary cell in the master cell group.

10. The method according to any one of claims 5 to 9, wherein the method further comprises:
collecting, by the first network device, statistics about a first delay, wherein the first delay is an average inter-station interaction delay between the first network device and the second network device.

11. A communication method, wherein the method comprises:
receiving, by a second network device, first failure information from a terminal device, wherein the first failure information comprises information indicating that a radio link between the terminal device and a first network device fails and first conditional handover configuration information, the first network device is a network device to which a master cell group accessed by the terminal device belongs, and the second network device is a network device to which a secondary cell group accessed by the terminal device belongs;
sending, by the second network device, the first failure information to the first network device;
receiving, by the second network device, first response information from the first network device; and
sending, by the second network device, the first response information to the terminal device, wherein
the first response message comprises first indication information or a cell identifier of a first cell; and
the first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

12. The method according to claim 11, wherein the method further comprises:
collecting, by the second network device, statistics about a second delay, wherein the second delay is an average inter-station interaction delay of exchanging the first failure information and the first response information between the second network device and the first network device, or an average inter-station interaction delay between the second network device and the first network device; and
collecting, by the second network device, statistics about a third delay, wherein the third delay is an average air interface interaction delay of exchanging the first failure information and the first response information between the second network device and the terminal device, or an average air interface interaction delay between the second network device and the terminal device, and the average air interface interaction delay is classified into an uplink delay and a downlink delay.

13. A communication method, wherein the method comprises:
if a radio link between a terminal device and a first network device fails, fast link recovery between the terminal device and the first network device fails, and a first timer does not expire, recording, by the terminal device, first failure information and third failure information in a first radio link failure report; or
if the radio link between the terminal device and the first network device fails, the fast link recovery between the terminal device and the first network device fails, and the first timer expires, recording, by the terminal device, the first failure information in a second radio link failure report, and recording the third failure information in a third radio link failure report, wherein
the first failure information is information indicating that the radio link between the terminal device and the first network device fails, and the third failure information is information indicating that the terminal device fails to perform the fast link recovery;
the first network device is a network device to which a master cell group accessed by the terminal device belongs; and
the first timer is started by the terminal device when the terminal device detects that the radio link between the terminal device and the first network device fails.

14. The method according to claim 13, wherein the third failure information comprises one or more of the following: indication information indicating whether the terminal device fails to perform the fast link recovery, a reason why a third timer expires, a reason why a radio link failure occurs in a secondary cell group, and secondary cell group deactivation.

15. The method according to claim 13 or 14, wherein the method further comprises:
sending, by the terminal device, the first radio link failure report, the second radio link failure report, or the third radio link failure report to a fourth network device, wherein
the fourth network device is a network device that the terminal device successfully accesses after detecting that the radio link between the terminal device and the first network device fails and that the fast link recovery between the terminal device and the first network device fails.

16. The method according to claim 13, wherein the method further comprises:
when the terminal device fails to perform conditional handover-based recovery by using a third cell, determining a recording manner of the first failure information, the third failure information, and fourth failure information based on a second timer, wherein
the fourth failure information is information indicating that the terminal device fails to perform the conditional handover-based recovery by using the third cell;
the third cell is a cell obtained by the terminal device through cell selection after the terminal device detects that the radio link between the terminal device and the first network device fails and that the fast link recovery between the terminal device and the first network device fails, and is a cell in a candidate cell configured based on first conditional handover configuration information; and
the second timer is started by the terminal device when the terminal device detects that the fast link recovery between the terminal device and the first network device fails.

17. The method according to claim 16, wherein the first failure information and the third failure information are recorded in the first radio link failure report; and
the determining a recording manner of the first failure information, the third failure information, and fourth failure information based on a second timer comprises:
if the second timer does not expire, recording the fourth failure information in the first radio link failure report; or
if the second timer expires, recording the fourth failure information in a fourth radio link failure report.

18. The method according to claim 16, wherein the first failure information is recorded in the second radio link failure report, and the second failure information is recorded in the third radio link failure report; and
the determining a recording manner of the first failure information, the third failure information, and fourth failure information based on a second timer comprises:
if the second timer does not expire, recording the fourth failure information in the second radio link failure report or the third radio link failure report; or
if the second timer expires, recording the fourth failure information in a fourth radio link failure report.

19. The method according to claim 17, wherein the method further comprises:
sending, by the terminal device, the first radio link failure report or the fourth radio link failure report to a third network device, wherein
the third network device is a network device that the terminal device successfully re-accesses.

20. The method according to claim 18, wherein the method further comprises:
sending, by the terminal device, the second radio link failure report, the third radio link failure report, or the fourth radio link failure report to a third network device, wherein
the third network device is a network device that the terminal device successfully re-accesses after failing to perform the conditional handover-based recovery.

21. A communication apparatus, wherein the apparatus comprises:
a communication unit, configured to send first failure information to a second network device when a radio link between the apparatus and a first network device fails, wherein the first failure information comprises first conditional handover configuration information, the first network device is a network device to which a master cell group accessed by the apparatus belongs, and the second network device is a network device to which a secondary cell group accessed by the apparatus belongs, wherein
the communication unit is further configured to receive a first response message from the second network device, wherein the first response message comprises first indication information or a cell identifier of a first cell, wherein
the first indication information indicates the apparatus to select a cell to access from a candidate cell configured based on the first conditional handover configuration information; and
the first cell is a cell to which the apparatus is to be handed over and is a cell in the candidate cell configured based on the first conditional handover configuration information.

22. A communication apparatus, wherein the apparatus comprises:
a communication unit, configured to receive first failure information from a second network device, wherein the first failure information comprises information indicating that a radio link between a terminal device and the apparatus fails and first conditional handover configuration information, the apparatus is an apparatus to which a master cell group accessed by the terminal device belongs, and the second network device is a network device to which a secondary cell group accessed by the terminal device belongs, wherein
the communication unit is further configured to send first response information to the second network device, wherein the first response message comprises first indication information or a cell identifier of a first cell, wherein
the first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

23. A communication apparatus, wherein the apparatus comprises:
a communication unit, configured to receive first failure information from a terminal device, wherein the first failure information comprises information indicating that a radio link between the terminal device and a first network device fails and first conditional handover configuration information, the first network device is a network device to which a master cell group accessed by the terminal device belongs, and the apparatus is an apparatus to which a secondary cell group accessed by the terminal device belongs, wherein
the communication unit is further configured to send the first failure information to the first network device;
the communication unit is further configured to receive first response information from the first network device; and
the communication unit is further configured to send the first response information to the terminal device, wherein
the first response message comprises first indication information or a cell identifier of a first cell; and
the first indication information indicates the terminal device to select a cell to access from a candidate cell configured based on the first conditional handover configuration information, and the first cell is a cell to which the terminal device is to be handed over and is a cell in the candidate cell configured based on the first conditional handover configuration information.

24. A communication apparatus, wherein the apparatus comprises:
a processing unit, configured to: if a radio link between the apparatus and a first network device fails, fast link recovery between the apparatus and the first network device fails, and a first timer does not expire, record first failure information and third failure information in a first radio link failure report, wherein
the processing unit is further configured to: if the radio link between the apparatus and the first network device fails, the fast link recovery between the apparatus and the first network device fails, and the first timer expires, record the first failure information in a second radio link failure report, and record the third failure information in a third radio link failure report, wherein
the first failure information is information indicating that the radio link between the apparatus and the first network device fails, and the third failure information is information indicating that the apparatus fails to perform the fast link recovery;
the first network device is a network device to which a master cell group accessed by the apparatus belongs; and
the first timer is started by the apparatus when the apparatus detects that the radio link between the apparatus and the first network device fails.

25. A communication apparatus, comprising a processor and a transceiver, wherein the transceiver is configured to communicate with another communication apparatus, and the processor is configured to run a program, so that the communication apparatus implements the method according to any one of claims 1 to 4, the method according to any one of claims 5 to 10, the method according to claim 11 or 12, or the method according to any one of claims 13 to 20.

26. A computer-readable storage medium, wherein the computer-readable storage medium is configured to store instructions; and when the instructions are run on a computer, the method according to any one of claims 1 to 4, the method according to any one of claims 5 to 10, the method according to claim 11 or 12, or the method according to any one of claims 13 to 20 is performed.

27. A computer program product comprising instructions, wherein when the instructions are run on a computer, the method according to any one of claims 1 to 4, the method according to any one of claims 5 to 10, the method according to claim 11 or 12, or the method according to any one of claims 13 to 20 is performed.
